# EUROPEAN PATENT APPLICATION

(11) **EP 4 317 213 A1**
(43) Date of publication of application: **07.02.2024**
(21) Application number: 22781342.5
(22) Date of filing: 31.03.2022
(51) Int. Cl.: C08F 20/10, C08F 20/34, D21H 17/37, D21H 21/14

(54) **OIL-RESISTANT COMPOUND CONTAINING HYDROGEN BINDING SITE**

(30) Priority: 31.03.2021 JP 2021060250
(71) Applicant: DAIKIN INDUSTRIES, LTD., Osaka-Shi, Osaka 530-0001 (JP)
(72) Inventor: SHIOTANI, Yuko, Osaka-shi, Osaka 530-0001 (JP); AOYAMA, Hirokazu, Osaka-shi, Osaka 530-0001 (JP); AKUTA, Ryo, Osaka-shi, Osaka 530-0001 (JP)
(74) Representative: Hoffmann Eitle
(86) International application number: PCT/JP2022/017655
(87) International publication number: WO 2022/211135

(57) **Abstract**

The present invention provides a compound or oil-resistant agent, which is capable of imparting paper with excellent oil resistance, and if necessary, water resistance. This compound or oil-resistant agent satisfies at least one of: (i), (ii) the peak intensity at 2θ of 5° or less is not less than 0.7 times the peak intensity at 2θ of 15° to 25° at a measurement temperature of 25°C or 80°C as determined by an X-ray diffraction method (XRD); (iii) the half-value width of the peak at 2θ of 15° to 25° at a measurement temperature of 25°C is 2.0° or more as determined by an X-ray diffraction method (XRD); (iv) the value of the peak top at 2θ of 5° or less does not change at measurement temperatures from 25°C to 70°C as determined by an X-ray diffraction method (XRD); (v) the peak intensity at 2θ of 5° or less is maintained at measurement temperatures from 25°C to 80°C as determined by an X-ray diffraction method (XRD); and (vi) the half-value width of the melting peak of 0°C to 120°C is 4.5°C or more as determined by differential scanning calorimetry (DSC).

## Description

### Technical Field

The present disclosure relates to an oil-resistant compound containing a hydrogen bonding moiety and an oil-resistant agent comprising the oil-resistant compound containing a hydrogen bonding moiety.

### Background Art

Food packaging materials and food containers made of paper are required to prevent moisture and oil in the food from seeping out. Therefore, oil-resistant agents have been applied to paper by internal addition or external addition.

In an oil-resistant agent for paper which does not contain fluorine, a compound (polymer) having a hydrocarbon group which imparts oil-resistance may be used as an active ingredient. Since the exhibition of oil-resistance by the hydrocarbon group utilizes the crystallinity of the long-chain alkyl moiety, it is considered that the heat resistance mainly depends on the melting temperature of the crystal of the long-chain alkyl moiety of the compound, and it is difficult to maintain the oil-resistant at a temperature equal to or higher than the temperature at which the crystal of the long-chain alkyl moiety melts.

Patent Literature 1 (WO 2020/054856 A) discloses an oil-resistant agent for paper comprising a non-fluorine copolymer having (a) a repeating unit formed from an acrylic monomer having a long-chain hydrocarbon group having 7 to 40 carbon atoms and (b) a repeating unit formed from an acrylic monomer having a hydrophilic group.

Patent Literature 2 (WO 2019/026593 A) discloses a water-repellent composition comprising: (a) a polymer having a repeating unit derived from an amide group-containing monomer of a specific chemical formula in an amount of 2 to 100% by weight based on the polymer; and (b) a liquid medium.

Patent Literature 3 (Japanese Patent Application Laid-open No. 2019-026746) discloses a water-repellent composition comprising: (1) a polymer having a repeating unit derived from a nitrogen-containing monomer represented by the formula: CH₂=C(-R²)-C(=O)-Y¹-Z(-Y²-R¹)ₙ wherein R¹ is a hydrocarbon group having 7 to 40 carbon atoms, R² is a hydrogen atom or a methyl group, Y¹ is -O- or -NH-, Y² is -O-C(=O)-NH- or -NH-C(=O)-NH-, Z is a divalent or trivalent hydrocarbon group having 1 to 5 carbon atoms, and n is 1 or 2, in an amount of 30 to 1000 by weight, based on the polymer; and (2) a liquid medium.

Patent Literature 4 (Japanese Patent Application Laid-open No. 2018-506657) discloses a method of treating a fibrous substrate to render the fibrous substrate to be water-repellent, the fiber substrate comprising one or more polymeric compounds derived from the polymerization of at least one (meth)acrylate monomer comprising at least one isocyanate-derived group and at least one hydrocarbon group having at least 16 carbon atoms.

Patent Literature 5 (Japanese Patent Application Laid-open No. 2011-074117) discloses an ink composition comprising (A) an acrylic compound containing -O- or -NH- and an alkyl group, (B) a (meth)acrylate compound having an aliphatic cyclic structure, and (C) a radical polymerization initiator.

### Citation List

### Patent Literature

Patent Literature 1: International Publication No. WO 2020/054856 A
Patent Literature 2: International Publication No. WO 2019/026593 A
Patent Literature 3: Japanese Patent Application Laid-open No. 2019-026746
Patent Literature 4: Japanese Patent Application Laid-open No. 2018-506657
Patent Literature 5: Japanese Patent Application Laid-open No. 2011-074117

### Summary of Invention

### Technical Problem

An object of the present disclosure is to provide a compound or an oil-resistant agent which can impart excellent oil-resistance and, if necessary, water-resistance to paper, and whose oil-resistance does not depend only on the crystallinity of a long-chain alkyl group.

### Solution to Problem

The present disclosure provides a non-fluorine compound satisfying at least one of:
in an X-ray diffraction (XRD) measurement,
   (i) having an intensity of a peak at 2Θ of 5° or less which is 0.7 times or more an intensity of a peak at 15 to 25° at a measurement temperature of 25°C;
   (ii) having an intensity of a peak at 2Θ of 5° or less which is 0.7 times or more an intensity of a peak at 15 to 25° at a measurement temperature of 80°C;
   (iii) having a half width of a peak at 2Θ of 15 to 25° of 2.0° or more at a measurement temperature of 25°C;
   (iv) having a value of peak top at 2Θ of 5° or less which does not change at a measurement temperature of 25°C to 70°C; and
   (v) having an intensity of a peak at 2Θ of 5° or less which is maintained at a measurement temperature of 25°C to 80°C, and
in a differential scanning calorimetry (DSC) measurement,
   (vi) having a half width of a melting peak at 0°C to 120°C of 4.5°C or more,
wherein the non-fluorine compound has a hexadecane (HD) contact angle of 30° or more at a measurement temperature of 25°C and/or is not soluble in corn oil at 25°C.

The present disclosure provides a non-fluorine oil-resistant compound (oil-resistant compound) satisfying at least one of:
(i) having a hexadecane (HD) contact angle at 70°C of 30° or more;
(ii) being insoluble in corn oil at 120°C;
   when adhered to a paper,
(iii) having an oil-resistant thin paper test result at 70°C of 3 minutes or more;
(iv) having a high-temperature oil-resistant thin paper test result of 80°C or more; and
(v) having a paper dish test result using oil at 65°C of less than 500 oil stain,
wherein the non-fluorine oil-resistant compound has a melting point of 30°C or more and/or a glass transition temperature of 0°C or more and/or a crystallization temperature of 30°C or more.

The present disclosure provides the compound as described above, wherein the compound has a linear hydrocarbon group and a hydrogen bonding moiety.

The present disclosure further provides an oil-resistant agent comprising the compound as described above.

Oil-resistant compounds are active ingredients that imparts oil-resistance in oil-resistant agents and oil-resistant agent compositions.

Preferred embodiments of the present disclosure are as follows.

### Embodiment 1:

A non-fluorine compound satisfying at least one of:
in an X-ray diffraction (XRD) measurement,
   (i) having an intensity of a peak at 2Θ of 5° or less which is 0.7 times or more an intensity of a peak at 15 to 25° at a measurement temperature of 25°C;
   (ii) having an intensity of a peak at 2Θ of 5° or less which is 0.7 times or more an intensity of a peak at 15 to 25° at a measurement temperature of 80°C;
   (iii) having a half width of a peak at 2Θ of 15 to 25° of 2.0° or more at a measurement temperature of 25°C;
   (iv) having a value of peak top at 2Θ of 5° or less which does not change at a measurement temperature of 25°C to 70°C; and
   (v) having an intensity of a peak at 2Θ of 5° or less which is maintained at a measurement temperature of 25°C to 80°C, and
in a differential scanning calorimetry (DSC) measurement,
   (vi) having a half width of a melting peak at 0°C to 120°C of 4.5°C or more,
wherein the non-fluorine compound has a hexadecane (HD) contact angle of 30° or more at a measurement temperature of 25°C and/or is not soluble in corn oil at 25°C.

### Embodiment 2:

A non-fluorine compound satisfying at least one of:
(i) having a hexadecane (HD) contact angle at 70°C of 30° or more;
(ii) being insoluble in corn oil at 120°C;
   when adhered to a paper,
(iii) having an oil-resistant thin paper test result at 70°C of 3 minutes or more;
(iv) having a high-temperature oil-resistant thin paper test result of 80°C or more; and
(v) having a paper dish test result using oil at 65°C of less than 500 oil stain,
wherein non-fluorine compound has a melting point of 30°C or more and/or a glass transition temperature of 0°C or more and/or a crystallization temperature of 30°C or more.

### Embodiment 3:

The non-fluorine compound according to Embodiment 1 or 2, wherein the non-fluorine compound has a linear hydrocarbon group or a branched or cyclic hydrocarbon group and a hydrogen bonding moiety.

### Embodiment 4:

The non-fluorine compound according to Embodiment 3, wherein the non-fluorine compound is an acrylic compound.

### Embodiment 5:

An oil-resistant agent comprising the non-fluorine compound according to any one of Embodiments 1 to 4.

### Embodiment 6:

The oil-resistant agent according to Embodiment 5, wherein the non-fluorine compound is a non-fluorine polymer, and
the non-fluorine polymer comprises a repeating unit formed from a hydrocarbon group/hydrogen bonding moiety-containing acrylic monomer represented by
(1) the formula:

   CH₂=C(-R¹²)-C(=O)-Y-X¹¹(Z-X¹²-R¹¹)ₖ

   wherein R¹¹ is a linear, branched, or cyclic hydrocarbon group having 3 to 22 carbon atoms;
   R¹² is a hydrogen atom, a monovalent organic group, or a halogen atom excluding a fluorine atom;
   Y is -O- or -NR'-, wherein R' is H or a hydrocarbon group having 1 to 4 carbon atoms;
   Z is a group composed of at least one selected from -NH-, -(C=O)-, -O-, and -SO₂-;
   X¹¹ is a direct bond or a divalent to tetravalent group composed of at least one selected from a hydrocarbon group having 1 to 20 carbon atoms optionally including a hydrocarbon moiety having a substituent; - (CH₂CH₂O)ᵣ-, wherein r is an integer of 1 to 10, -C₆H₄-, - O-, or -NR'-, wherein R' is H or a hydrocarbon group having 1 to 4 carbon atoms;
   X¹² is a direct bond or a divalent group composed of at least one selected from a hydrocarbon group having 1 to 20 carbon atoms optionally including a hydrocarbon moiety having a substituent; -(CH₂CH₂O)ᵣ-, wherein r is an integer of 1 to 10, -O-, or -NR'-, wherein R' is H or a hydrocarbon group having 1 to 4 carbon atoms; and
   k is 1 to 3, or

      CH₂=C(-R¹²)-C(=O)-O-(CH₂)ₘ-Z-R¹¹
   wherein R¹¹, R¹², and Z are as defined above, and m is a number of 1 to 20.

### Embodiment 7:

The oil-resistant agent according to Embodiment 6, wherein the non-fluorine polymer comprises a repeating unit formed from a reactive/hydrophilic monomer represented by the formula:

CH₂=C(-R²²)-C(=O)-Y²¹-(R²³)ₒ(R²¹)ₘ

or

CH₂=C(-R³²)-Y³¹-(H)₅₋ₙ(R³¹)ₙ

wherein R²¹ and R³¹ are each independently a reactive group or a hydrophilic group;
R²² and R³² are a hydrogen atom, a monovalent organic group, or a halogen atom excluding a fluorine atom;
Y²¹ is a direct bond, -O- or -NR'-, wherein R' is H or a hydrocarbon group having 1 to 4 carbon atoms;
R²³ is a group having a direct bond or a divalent to tetravalent hydrocarbon group having 1 to 10 carbon atoms optionally including a hydrocarbon moiety having a substituent;
Y³¹ is a benzene ring;
H is a hydrogen atom;
H and R³¹ are each directly bonded to Y³¹;
m and n are 1 to 3; and
o is 0 or 1,
and/or
a reactive/hydrophilic monomer represented by the formula:

   CH₂=CR⁴²-C(=O)-O-(RO)ₙ-X⁴¹
wherein X⁴¹ is a hydrogen atom or an unsaturated or saturated hydrocarbon group having 1 to 22 carbon atoms;
R⁴² is a hydrogen atom or a methyl group;
R is an alkylene group having 2 to 6 carbon atoms; and
n is an integer of 1 to 90.

### Embodiment 8:

The oil-resistant agent according to Embodiment 6 or 7, wherein the non-fluorine polymer comprises a repeating unit formed from a crosslinkable monomer represented by the formula: 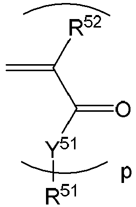 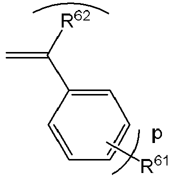 or 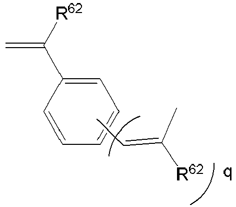
wherein R⁵¹ and R⁶¹ are each independently a direct bond or a divalent to tetravalent group composed of at least one selected from a hydrocarbon group having 1 to 20 carbon atoms optionally including a hydrocarbon moiety having a substituent; -(CH₂CH₂O)ᵣ-, wherein r is an integer of 1 to 10, -C₆H₄-, -O-, or -NR'-, wherein R' is H or a hydrocarbon group having 1 to 4 carbon atoms;
R⁵² and R⁶² are each independently a hydrogen atom, a monovalent organic group, or a halogen atom excluding a fluorine atom;
Y⁵¹ is -O- or -NR'-, wherein R' is H or a hydrocarbon group having 1 to 4 carbon atoms;
p is 2 to 4; and
q is 1 to 5.

### Embodiment 9:

The oil-resistant agent according to any one of Embodiments 5 to 8, comprising a cross-linking agent. Embodiment 10:
An oil-resistant agent composition comprising:
the oil-resistant agent according to any one of Embodiments 5 to 9; and
a liquid medium which is water or a mixture of water and an organic solvent.

### Embodiment 11:

The oil-resistant agent composition according to Embodiment 10, further comprising an emulsifier (dispersant).

### Embodiment 12:

The oil-resistant agent composition according to Embodiment 10 or 11, which is an oil-resistant agent composition for a paper.

### Embodiment 13:

A method for treating an oil-resistant paper, comprising applying, to a paper, the non-fluorine compound, the oil-resistant agent, or the oil-resistant agent composition according to any one of Embodiments 1 to 12.

### Embodiment 14:

An oil-resistant paper comprising the non-fluorine compound according to any one of Embodiments 1 to 12 adhered to the paper.

### Effects of Invention

According to the present disclosure, it is possible to obtain a compound or an oil-resistant agent which can impart excellent oil-resistance and, if necessary, water-resistance to paper, and whose oil-resistance does not depend only on the crystallinity of a long-chain alkyl group.

### Brief Description of Drawings

[Figure 1] Figure 1 is X-ray diffraction patterns of a polymer obtained in Synthesis Example 1 at various measurement temperatures.
[Figure 2] Figure 2 is enlarged X-ray diffraction patterns of the polymer obtained in Synthesis Example 1 at (a) a measurement temperature of 25°C and (b) a measurement temperature of 80°C.
[Figure 3] Figure 3 is X-ray diffraction patterns of a polymer obtained in Synthesis Example 18 at various measurement temperatures.
[Figure 4] Figure 4 is a chart of differential scanning calorimetry (DSC) measurement of the polymer obtained in Synthesis Example 1.

### Description of Embodiments

An oil-resistant agent or an oil-resistant agent composition comprises (A) a non-fluorine oil-resistant compound (oil-resistant compound). In the oil-resistant agent or the oil-resistant agent composition, the oil-resistant compound is an active ingredient that exhibits oil-resistance.

The oil-resistant agent or the oil-resistant agent composition preferably also contains (B) a liquid medium which is water and/or an organic solvent, preferably water or a mixture of water and an organic solvent (aqueous medium).

The present disclosure provides an oil-resistant paper that has been treated with an oil-resistant agent (oil-resistant agent for a paper) or an oil-resistant agent composition (oil-resistant agent composition for a paper). The treatment of the paper is external addition or internal addition. The oil-resistant paper has an oil-resistant layer containing an oil-resistant compound by an external addition treatment method of the oil-resistant agent for a paper. Alternatively, the oil-resistant paper contains the oil-resistant compound inside the paper by an internal addition treatment method of the oil-resistant agent for a paper.

### (A) Non-fluorine oil-resistant compound (oil-resistant compound)

In an X-ray diffraction (XRD) measurement, the oil-resistant compound preferably satisfies at least one of:
(i) having an intensity of a peak at 2Θ of 5° or less which is 0.7 times or more an intensity of a peak at 15 to 25° at a measurement temperature of 25°C;
(ii) having an intensity of a peak at 2Θ of 5° or less which is 0.7 times or more an intensity of a peak at 15 to 25° at a measurement temperature of 80°C;
(iii) having a half width of a peak at 2Θ of 15 to 25° of 2.0° or more at a measurement temperature of 25°C;
(iv) having a value of peak top at 2Θ of 5° or less which does not change at a measurement temperature of 25°C to 70°C; and
(v) having an intensity of a peak at 2Θ of 5° or less which is maintained at a measurement temperature of 25°C to 80°C.

The XRD measurement is generally performed in the vicinity of room temperature of 25°C, but the XRD measurement can be performed at a predetermined temperature using a temperature-variable XRD apparatus such as XRD-DSC measurement.

In the XRD measurement, it is preferable that a peak is present at 2Θ of 5° or less (for example, 1.5° to 4.9° or 1.9° to 4.5°), and the intensity thereof is the highest. The upper limit of 2Θ may be 4.8°, 4.6°, 4.4°, 4.2°, or 4.0°, and the lower limit of 2Θ may be 0.4°, 0.6°, 0.8°, 1.0°, or 1.2°.

Alternatively, in general, the peak at 2Θ of 5° or less in XRD measurement is derived from a phase-separated structure such as a lamellar structure, and this structure is important for exhibition of oil-resistance. The peak at 2Θ of 15 to 25° (for example, the peak top is 16° to 24°, preferably 18° to 24° or 19° to 23°) is derived from the packing (crystallinity) of the long-chain alkyl group. The packing of the long-chain alkyl group contributes to the improvement of the liquid repellency, and thus this peak may be present, but since this peak alone is not good in terms of heat resistance at a high temperature, it is preferable to have peaks at both 2Θ of 5° or less and 15 to 25°. In a case where the melting point is 100°C or more in the DSC measurement, the peak at 2Θ of 5° or less may not be present.

From the viewpoint of exhibition of oil-resistance at high temperature, the peak at 2Θ of 5° or less or 15 to 25° is preferably a peak having the maximum intensity in XRD.

At a measurement temperature of 25°C and/or 80°C in XRD measurement, the intensity of a peak at 2Θ of 5° or less (for example, 1.5° to 4.9°) is preferably 0.7 times or more the intensity of a peak at 15 to 25°, and more preferably 0.8 times or more or 1.0 times or more, for example, 5 times or more or 10 times or more (the upper limit may be 1,000 times or 500 times). The half width of the peak at 2Θ of 15 to 25° is preferably 2.0° or more, 2.5° or more, 3.0° or more, or 3.5° or more. A larger half width of the peak at 2Θ of 15 to 25° means that long-chain alkyl groups have lower crystallinity or no crystallinity. In XRD and DSC measurements, the term "half width" means the width of the mountain at half height from the peak top of the mountain peak in the chart obtained as a result of the measurement, or means the width of the valley at half height (depth) from the peak top of the valley peak. When the measurement is performed by changing the measurement temperature of the XRD measurement, the value of the peak top at 2Θ of 5° or less preferably does not change between the measurement temperatures of 25°C and 60°C, more preferably does not change between 25°C and 70°C, 25°C and 80°C, 25°C and 90°C, or 25°C and 100°C, and still more preferably does not change between 25°C and 130°C. The expression "the value of the peak top does not change" means that the difference between the values of 2Θ at the peak top is less than 0.2°. From the viewpoint of exhibition of oil-resistance at high temperature, it is preferable that the value of the peak top does not change even at high temperature. When the measurement is performed by changing the measurement temperature of the XRD measurement, the intensity of the peak at 2Θ of 5° or less is preferably maintained between the measurement temperatures of 25°C and 60°C, more preferably maintained between 25°C and 70°C, 25°C and 80°C, 25°C and 90°C, or 25°C and 100°C, and still more preferably maintained between 25°C and 130°C. The expression "the intensity of the peak is maintained" means that the intensity of the peak at a predetermined measurement temperature is 50% or more when the intensity of the peak at 25°C is set to 1000. The intensity of the peak is preferably as high as possible, and is preferably 700 or more or 900 or more. From the viewpoint of exhibition of oil-resistance at high temperature, it is preferable that the intensity of the peak does not decrease even at high temperature. The terms "peak at 2Θ of 5° or less" and "peak at 2Θ of 15 to 25°" mean that the value of the peak top is within the range of 2Θ (5° or less, or 15 to 25°).

In differential scanning calorimetry (DSC) of the oil-resistant compound,
(vi) a half width of a melting peak at a melting point of 0°C to 120°C is preferably 4.5°C or more. The half width of the melting peak at a melting point of 0°C to 120°C is preferably 4.5°C or more, 5.0°C or more, 5.5°C or more, or 6.0°C or more. The term "half width of the melting peak at a melting point of 0°C to 120°C" means the half width of the melting point of the melting peak having the highest heat value when there are a plurality of melting points at 0°C to 120°C. A larger half width of the melting peak means lower crystallinity or no crystallinity. The melting point is preferably as high as possible, and is more preferably 30°C or more, 40°C or more, 50°C or more, 70°C or more, 80°C or more, or 90°C or more. Further, it is also preferable that the oil-resistant compound maintains a solid state even at a temperature exceeding 120°C and does not have a melting point at 0 to 180°C.

The oil-resistant compound preferably satisfies at least one of:
(i) having a hexadecane (HD) contact angle at 70°C of 30° or more;
(ii) being insoluble in corn oil at 120°C;
   when adhered to a paper,
(iii) having an oil-resistant thin paper test result at 70°C of 3 minutes or more;
(iv) having a high-temperature oil-resistant thin paper test result of 80°C or more; and
(v) having a paper dish test result using oil at 65°C of less than 500 oil stain.

The oil-resistant compound preferably has a hexadecane (HD) contact angle of 30° or more, preferably 35° or more, 38° or more, 39° or more, or 40° or more, at a measurement temperature of 70°C. The oil-resistant compound preferably has a hexadecane (HD) contact angle of 30° or more, preferably 35° or more, 38° or more, 39° or more, or 40° or more, at a measurement temperature of 25°C. This contact angle is exhibited on paper, on a silicon substrate, on a PET substrate, on a glass substrate and on a fabric. The oil-resistant compound preferably has a hexadecane contact angle of 15° or more, preferably 20° or more, 30° or more, 35° or more, or 40° or more at a predetermined measurement temperature when the hexadecane contact angle is measured at an increased temperature from 25°C. In the oil-resistant compound, a higher contact angle at a higher temperature means higher oil-resistance at a high temperature, which is preferable.

The static contact angle can be measured by spin-coating a solution of the oil-resistant compound having a solid content concentration of 1.0% (the solvent is a good solvent for oil-resistant compound, such as chloroform and methanol) on a silicon wafer substrate. The static contact angle can be measured by dropping 2 µL of hexadecane on the coating film and measuring the contact angle 1 second after the dropping using a fully automatic contact angle meter (DropMaster701, manufactured by Kyowa Interface Science Co., Ltd.). The static contact angle measurement at a predetermined temperature (temperature variable contact angle measurement) can be performed after dropping 2 µL of hexadecane, after setting the temperature of the silicon wafer substrate to a predetermined temperature, and measuring the contact angle 1 minute after by using a fully automatic contact angle meter (DropMaster701, manufactured by Kyowa Interface Science Co., Ltd.)

The oil-resistant compound is preferably not soluble in corn oil at 25°C. Being not soluble, that is, "insoluble" in corn oil, means that at 25°C, 0.01 g of the oil-resistant compound is not all soluble in 1.00 g of corn oil (i.e., not partially or completely soluble). The high-temperature oil-resistance can also be evaluated based on whether or not the compound dissolves when mixed with corn oil at 120°C. Being "insoluble" in corn oil at 120°C means that at 120°C, 0.01 g of the oil-resistant compound is not all soluble in 1.00 g of corn oil (i.e., not partially or completely soluble). Being insoluble in corn oil at 120°C means oil-resistance to corn oil at 120°C.

The oil-resistant compound, when adhered to a paper, preferably has an oil-resistance of 1 minute or more, preferably 2 minutes or more, 3 minutes or more, 5 minutes or more or 7 minutes or more in oil-resistant thin paper test at 70°C.

In the oil-resistant thin paper test at 70°C, corn oil at 70°C is placed on the surface of treated paper and the treated paper is held in an oven at 70°C, and the time until the corn oil permeates is measured. The higher the number of minutes in the 70°C oil-resistant thin paper test, the higher the oil-resistance at 70°C.

The oil-resistant compound, when adhered to a paper, preferably has an oil-resistance at 80°C or more, preferably 90°C or more, 95°C or more, 100°C or more or 105°C or more in high-temperature oil-resistant thin paper test.

In the high-temperature oil-resistant thin paper test, corn oil at a predetermined temperature is placed on the surface of treated paper, and the treated paper is held in an oven at a predetermined temperature for 1 minute, and the permeation of corn oil is visually determined. The highest temperature at which the corn oil does not penetrate is taken as the evaluation result. The higher the temperature in the high-temperature oil-resistant thin paper test, the higher the high-temperature oil-resistance.

The oil-resistant compound preferably has less than 500 oil stain in paper dish test using oil at 65°C.

In the paper dish test, 100 ml of an evaluation liquid (corn oil) at 65°C is poured into a container-shaped molded pulp product containing the oil-resistant compound, and after allowing to stand for 5 minutes, the evaluation liquid is discarded, and the degree of stain of the evaluation liquid on the molded pulp product (container) is visually evaluated according to the following criteria.
A: Oil stain on the outside of the molded pulp container bottom is less than 500 of the container bottom area.
C: Oil stain on the outside of the molded pulp container bottom is 50% or more of the container bottom area.

The oil-resistant compound preferably has less than 500 oil stain in paper dish test using oil at 70°C, more preferably 75°C, 80°C. Further, when 100 ml of the evaluation liquid (corn oil) is poured into and after allowed to stand for 5 minutes or 10 minutes, preferably 20 minutes, 30 minutes, 40 minutes or 45 minutes and the evaluation liquid is discarded, in the degree of stain of the evaluation liquid on the molded pulp product (container), the oil stain on the outside of the molded pulp container bottom is preferably less than 500, more preferably less than 400, less than 300, preferably less than 20%, less than 10%, or less than 5% of the container bottom area.

The oil-resistant compound preferably has a melting point of 30°C or more and/or a glass transition temperature of 0°C or more and/or a crystallization temperature of 30°C or more. The melting point and crystallization temperature of the oil-resistant compound are preferably as high as possible, more preferably 30°C or more, 40°C or more, 50°C or more, 70°C or more, 80°C or more, or 90°C or more, and still more preferably 150°C or more. In a case where the oil-resistant compound has a glass transition temperature, the glass transition temperature is preferably 0°C or more, 10°C or more, 15°C or more, 20°C or more, or 30°C or more. When the oil-resistant compound has both a melting point and a glass transition temperature, and the melting point is 30°C or more, the glass transition temperature may be 0°C or less. Melting point, glass transition temperature, and crystallization temperature values can be obtained by differential scanning calorimetry (DSC) measurements. The glass transition temperature can be determined by determining the temperature indicated by the midpoint of the intersection between the extension of the each baseline before and after the second order transition of the DSC curve obtained in the DSC measurement and the tangent at the inflection point of the DSC curve.

The oil-resistant compound is preferably a non-fluorine compound having a linear (or branched or cyclic) hydrocarbon group and a hydrogen bonding moiety. The linear (or branched or cyclic) hydrocarbon group preferably has 3 to 22 carbon atoms, preferably 3 to 20 carbon atoms, and more preferably 3 to 18, 3 to 16, 3 to 14, 4 to 22, 4 to 20, 4 to 18, 4 to 16, 4 to 14, 6 to 22, 6 to 20, 6 to 18, 6 to 16, 6 to 14, 8 to 18, 8 to 16, or 8 to 14 carbon atoms. The hydrogen bonding moiety is a functional group capable of forming a hydrogen bond and can be represented by -Z-. Z is a group composed of at least one selected from -NH-, -(C=O)-, -O-, and -SO₂-. Specific examples of hydrogen bonding moiety include -NH-(C=O)-, -(C=O)-NH-, -NH-(C=O)-NH-, -NH-(C=O)-O-, -O-(C=O)-NH-, -SO₂-NH-, and -NH-SO₂-, and preferred are -NH-(C=O)-, -(C=O)-NH-, and -NH-(C=O)-NH-. A urea bond represented by -NH-(C=O)-NH- is more preferred because the hydrogen bond strength thereof is strongest. As the hydrocarbon groups become longer in their chains, crystallinity develops between the hydrocarbon groups. The stronger the hydrogen bonding nature of the hydrogen bonding moiety, the more crystallization is promoted. When hydrocarbon group and hydrogen bonding moiety are combined, the length of the hydrocarbon group that results in the highest (or lowest) melting point of the compound depends on the type of hydrogen-bonding site combined. Although high crystallinity between hydrocarbon groups develops high water-repellency, the melting point of the crystals can also be the limit of heat resistance for oil-resistance, so the length of the hydrocarbon group and hydrogen bonding moiety needs to be appropriately selected to balance these factors.

The oil-resistant compound may be a compound having a linear (or branched or cyclic) hydrocarbon group and several (for example, 2 to 8, 2 to 5, or 2 to 3) hydrogen bonding moieties. In the oil-resistant compound, a linear (or branched or cyclic) hydrocarbon group and a hydrogen bonding moiety serve as a site exhibiting oil-resistance, and therefore, the structure of the other portion of the compound may be any structure. The oil-resistant compound may have a repeating unit formed from a monomer containing a linear (or branched or cyclic) hydrocarbon group and a hydrogen bonding moiety, or may be a polymer composed of the repeating unit. The oil-resistant compound may have a repeating unit formed from an acrylic monomer containing a linear (or branched or cyclic) hydrocarbon group and a hydrogen bonding moiety, or may be a polymer composed of the repeating unit.

The oil-resistant compound is preferably an acrylic compound having a linear (or branched or cyclic) hydrocarbon group and a hydrogen bonding moiety from the viewpoint of ease of synthesis. The term "acrylic compound" means a compound having an acryloyl group (H₂C=CR¹-C(=O)-, where R¹ is a hydrogen atom, a methyl group, or a halogen atom such as a chlorine atom).

In one embodiment, the oil-resistant compound is an oil-resistant polymer. The oil-resistant compound may be a compound having a low molecular weight (weight-average molecular weight, for example, 100 to 1,000), but may be a polymer having a high molecular weight (weight-average molecular weight, for example, 500 to 10,000,000). The polymer may be a polymer formed from 2 to 10 (for example, 2 to 5) monomers (oligomer) or a polymer formed from 5 or 10 or more monomers. As used herein, the term "polymer" includes not only polymers but also oligomers.

In some embodiments, the oil-resistant compound is an oil-resistant polymer comprising a repeating unit formed from
(1) an acrylic monomer having a linear (or branched or cyclic) hydrocarbon group and a hydrogen bonding moiety.
   As used herein, the "oil-resistant polymer" is also simply referred to as "polymer."
   The oil-resistant polymer may further comprise a repeating unit formed from
(2) an acrylic monomer having a reactive and/or hydrophilic group.
   The oil-resistant polymer may further comprise, in addition to the monomers (1) and (2), a repeating unit formed from
(3) a monomer having a crosslinkable group.
   The oil-resistant polymer may further comprise, in addition to the monomers (1), (2), and (3), a repeating unit formed from
(4) a further monomer.
   The oil-resistant polymer is preferably a non-fluorine oil-resistant polymer.

### (1) Acrylic monomer having hydrocarbon group and hydrogen bonding moiety

The hydrocarbon group/hydrogen bonding moiety-containing acrylic monomer (or "hydrocarbon group-containing monomer") has a linear (or branched or cyclic) hydrocarbon group having 3 to 22 carbon atoms and a hydrogen bonding moiety.

The linear (or branched or cyclic) hydrocarbon group is preferably an aliphatic hydrocarbon group, particularly a saturated aliphatic hydrocarbon group, especially an alkyl group. The hydrocarbon group has 3 to 22 carbon atoms. Regarding the number of carbon atoms of the (linear, branched, or cyclic) hydrocarbon group, the lower limit may be 3, 4, 5, 6, 7, 8, 9, 10, or 11, and the upper limit may be 22, 21, 20, 19, 18, 17, 16, 15, 14, 13, or 12. The linear hydrocarbon group preferably has 3 to 22 carbon atoms, preferably 3 to 20 carbon atoms, preferably 3 to 18, 3 to 16, 3 to 14, 4 to 22, 4 to 20, 4 to 18, 4 to 16, 4 to 14, and preferably 6 to 22, 6 to 20, 6 to 18, 6 to 16, 6 to 14, 8 to 18, 8 to 16, or 8 to 14 carbon atoms. The branched hydrocarbon group preferably has 3 to 22 carbon atoms, preferably 3 to 20 carbon atoms, preferably 3 to 18, 3 to 16, 3 to 14, 4 to 22, 4 to 20, 4 to 18, 4 to 16, 4 to 14, and preferably 6 to 22, 6 to 20, 6 to 18, 6 to 16, 6 to 14, 8 to 18, 8 to 16, or 8 to 14 carbon atoms. The cyclic hydrocarbon group preferably has 3 to 22 carbon atoms, preferably 3 to 20 carbon atoms, preferably 3 to 18, 3 to 16, 3 to 14, 4 to 22, 4 to 20, 4 to 18, 4 to 16, 4 to 14, and preferably 6 to 22, 6 to 20, 6 to 18, 6 to 16, 6 to 14, 8 to 18, 8 to 16, or 8 to 14 carbon atoms. Linear hydrocarbon groups are most preferred because of its excellent oil-resistance.

The hydrocarbon group/hydrogen bonding moiety-containing acrylic monomer is preferably a fluorine-free monomer.

The hydrocarbon group/hydrogen bonding moiety-containing acrylic monomer (1) is preferably a monomer represented by the formula:

CH₂=C(-R¹²)-C(=O)-Y-X¹¹(-Z-X¹²-R¹¹)ₖ

wherein R¹¹ is a linear, branched, or cyclic hydrocarbon group having 3 to 22 carbon atoms;
R¹² is a hydrogen atom, a monovalent organic group, or a halogen atom excluding a fluorine atom;
Y is -O- or -NR'-, wherein R' is H or a hydrocarbon group having 1 to 4 carbon atoms; Z is a group composed of at least one selected from -NH-, -(C=O)-, -O-, and - SO₂-;
X¹¹ is a direct bond or a divalent to tetravalent group composed of at least one selected from a hydrocarbon group having 1 to 20 carbon atoms optionally including a hydrocarbon moiety having a substituent; - (CH₂CH₂O)ᵣ-, wherein r is an integer of 1 to 10, -C₆H₄-, - O-, or -NR'-, wherein R' is H or a hydrocarbon group having 1 to 4 carbon atoms;
X¹² is a direct bond or a divalent group composed of at least one selected from a hydrocarbon group having 1 to 20 carbon atoms optionally including a hydrocarbon moiety having a substituent; -(CH₂CH₂O)ᵣ-, wherein r is an integer of 1 to 10, -O-, or -NR'-, wherein R' is H or a hydrocarbon group having 1 to 4 carbon atoms; and
k is 1 to 3.

R¹¹ is a linear, branched, or cyclic hydrocarbon group having 3 to 22 carbon atoms. R¹¹ is preferably an aliphatic hydrocarbon group, particularly a saturated aliphatic hydrocarbon group, especially an alkyl group. The linear hydrocarbon group preferably has 3 to 22 carbon atoms, preferably 3 to 20 carbon atoms, preferably 3 to 18, 3 to 16, 3 to 14, 4 to 22, 4 to 20, 4 to 18, 4 to 16, 4 to 14, and preferably 6 to 22, 6 to 20, 6 to 18, 6 to 16, 6 to 14, 8 to 18, 8 to 16, or 8 to 14 carbon atoms. The branched hydrocarbon group preferably has 3 to 22 carbon atoms, preferably 3 to 20 carbon atoms, preferably 3 to 18, 3 to 16, 3 to 14, 4 to 22, 4 to 20, 4 to 18, 4 to 16, 4 to 14, and preferably 6 to 22, 6 to 20, 6 to 18, 6 to 16, 6 to 14, 8 to 18, 8 to 16, or 8 to 14 carbon atoms. The cyclic hydrocarbon group preferably has 3 to 22 carbon atoms, preferably 3 to 20 carbon atoms, preferably 3 to 18, 3 to 16, 3 to 14, 4 to 22, 4 to 20, 4 to 18, 4 to 16, 4 to 14, and preferably 6 to 22, 6 to 20, 6 to 18, 6 to 16, 6 to 14, 8 to 18, 8 to 16, or 8 to 14 carbon atoms. From the viewpoint of exhibition of oil-resistance, a linear hydrocarbon group is preferable.

R¹² may be a hydrogen atom, a methyl group, a halogen atom excluding a fluorine atom, a substituted or unsubstituted benzyl group, or a substituted or unsubstituted phenyl group. A hydrogen atom or a methyl group is preferable, and a hydrogen atom is preferable from the viewpoint of exhibition of oil-resistance.

Z is a group composed of at least one selected from -NH-, -(C=O)-, -O-, and -SO₂-. Specific examples of Z include -NH-(C=O)-, -(C=O)-NH-, -NH-(C=O)-NH-, -NH-(C=O)-O-, -O-(C=O)-NH-, -SO₂-NH-, and -NH-SO₂, and preferred are -NH-(C=O)-, -(C=O)-NH-, and -NH-(C=O)-NH-, and more preferred is a urea bond represented by -NH-(C=O)-NH-.

Y is preferably -O- or -NH-.
wherein X¹¹ is a direct bond or a divalent to tetravalent group composed of at least one selected from a hydrocarbon group having 1 to 20 carbon atoms optionally including a hydrocarbon moiety having a substituent; -(CH₂CH₂O)ᵣ-, wherein r is an integer of 1 to 10, -C₆H₄-, -O-, or -NR'-, wherein R' is H or a hydrocarbon group having 1 to 4 carbon atoms, and may have a linear structure or a branched structure. X¹¹ preferably has 2 to 8, 2 to 4, and particularly preferably 2 carbon atoms. Specific examples of X¹¹ include a direct bond, -CH₂-, -CH₂CH₂-, -CH₂CH₂CH₂-, - CH₂CH₂CH₂CH₂-, -CH₂CH₂CH₂CH₂CH₂-, -CH₂CH= having a branched structure, -CH₂(CH-)CH₂- having a branched structure, - CH₂CH₂CH= having a branched structure, -CH₂CH₂CH₂CH₂CH= having a branched structure, -CH₂CH₂(CH-)CH₂- having a branched structure, and -CH₂CH₂CH₂CH= having a branched structure.

X¹¹ is preferably not a direct bond.

Preferred examples of X¹² include a direct bond and - (CH₂CH₂O)ᵣ-, wherein r is an integer of 1 to 10, and preferred is a direct bond.

The hydrocarbon group/hydrogen bonding moiety-containing acrylic monomer is preferably

CH₂=C(-R¹²)-C (=O)-O-(CH₂)ₘ-Z-R¹¹

wherein R¹¹, R¹², and Z are as defined above, and m is a number of 1 to 20.

Preferred specific examples of the hydrocarbon group/hydrogen bonding moiety-containing acrylic monomer are as follows.

CH₂=CH-C(=O)-O-CH₂CH₂-NH-C(=O)-NH-C₃H₇

CH₂=CH-C(=O)-O-CH₂CH₂-NH-C(=O)-NH-C₆H₁₃

CH₂=CH-C(=O)-O-CH₂CH₂-NH-C(=O)-NH-C₈H₁₇

CH₂=CH-C(=O)-O-CH₂CH₂-NH-C(=O)-NH-C₁₀H₂₁

CH₂=CH-C(=O)-O-CH₂CH₂-NH-C(=O)-NH-C₁₂H₂₅

CH₂=CH-C(=O)-O-CH₂CH₂-NH-C(=O)-NH-C₁₄H₂₉

CH₂=CH-C(=O)-O-CH₂CH₂-NH-C(=O)-NH-C₁₆H₃₃

CH₂=CH-C(=O)-O-CH₂CH₂-NH-C(=O)-NH-C₁₈H₃₇

CH₂=CH-C(=O)-O-CH₂CH₂-NH-C(=O)-NH-C₂₂H₄₅

CH₂=CH-C(=O)-O-(CH₂)ₘ-NH-C(=O)-NH-CₙH₂ₙ₊₁

CH₂=CCH₃-C(=O) -O- (CH₂)ₘ-NH-C(=O) -NH-CₙH₂ₙ₊₁

CH₂=CH-C(=O)-O-CH₂CH₂-NH-C(=O)-C₁₁H₂₃

CH₂=CH-C(=O)-O-CH₂CH₂-O-C(=O)-NH-C₁₂H₂₅

CH₂=CH-C(=O)-O-(CH₂)ₘ-NH-C(=O)-CₙH₂ₙ₊₁

CH₂=CH-C(=O)-O-(CH₂)ₘ-O-C(=O)-NH-CₙH₂ₙ₊₁

CH₂=CH-C(=O)-O-(CH₂)ₘ-NH-C(=O)-O-CₙH₂ₙ₊₁

CH₂=CCH₃-C(=O)-O-(CH₂)ₘ-NH-C(=O)-CₙH₂ₙ₊₁

CH₂=CCH₃-C(=O)-O-(CH₂)ₘ-O-C(=O)-NH-CₙH₂ₙ₊₁

CH₂=CCH₃-C(=O)-O-(CH₂)ₘ-NH-C(=O)-O-CₙH₂ₙ₊₁

CH₂=CH-C(=O)-NH-(CH₂)ₘ-NH-C(=O)-CₙH₂ₙ₊₁

CH₂=CH-C(=O)-NH-(CH₂)ₘ-O-C(=O)-NH-CₙH₂ₙ₊₁

CH₂=CH-C(=O)-NH-(CH₂)ₘ-NH-C(=O)-O-CₙH₂ₙ₊₁

CH₂=CH-C(=O)-NH-(CH₂)ₘ-NH-C(=O)-NH-CₙH₂ₙ₊₁

CH₂=CCH₃-C(=O)-NH-(CH₂)ₘ-NH-C(=O)-CₙH₂ₙ₊₁

CH₂=CCH₃-C(=O)-NH-(CH₂)ₘ-O-C(=O)-NH-CₙH₂ₙ₊₁

CH₂=CCH₃-C(=O)-NH-(CH₂)ₘ-NH-C(=O)-O-CₙH₂ₙ₊₁

CH₂=CCH₃-C(=O)-NH-(CH₂)ₘ-NH-C(=O)-NH-CₙH₂ₙ₊₁

wherein m is a number of 1 to 20, and n is a number of 3 to 22.

The hydrocarbon group/hydrogen bonding moiety-containing acrylic monomer can be produced by reacting a hydroxyalkyl (meth)acrylate or hydroxyalkyl (meth)acrylamide with an alkyl isocyanate. Examples of the alkyl isocyanate include lauryl isocyanate, myristyl isocyanate, cetyl isocyanate, stearyl isocyanate, oleyl isocyanate, behenyl isocyanate, propyl isocyanate, hexyl isocyanate, octyl isocyanate, and decyl isocyanate.

The hydrocarbon group/hydrogen bonding moiety-containing acrylic monomer can also be produced by reacting a (meth)acrylate having an isocyanate group in the side chain, for example, 2-methacryloyloxyethyl methacrylate, with an alkylamine or an alkyl alcohol. Examples of the alkylamine include laurylamine, myristylamine, cetylamine, stearylamine, oleylamine, behenylamine, propylamine, hexylamine, octylamine, and decylamine. Examples of the alkyl alcohol include lauryl alcohol, myristyl alcohol, cetyl alcohol, stearyl alcohol, oleyl alcohol, behenyl alcohol, propyl alcohol, hexyl alcohol, octyl alcohol, and decyl alcohol.

Alternatively, the hydrocarbon group/hydrogen bonding moiety-containing acrylic monomer can also be produced by reacting (meth)acrylic acid chloride with alkylamidoethyl alcohol. Examples of the alkylamidoethyl alcohol include laurylamidoethyl alcohol, myristylamidoethyl alcohol, cetylamidoethyl alcohol, stearylamidoethyl alcohol, oleylamidoethyl alcohol, behenylamidoethyl alcohol, propylamidoethyl alcohol, hexylamidoethyl alcohol, octylamidoethyl alcohol, and decylamidoethyl alcohol.

### (2) Reactive/hydrophilic monomer

The reactive/hydrophilic monomer has one ethylenically unsaturated double bond and at least one reactive group and/or hydrophilic group.

Examples of the reactive group include an epoxy group (for example, glycidyl group), a chloromethyl group, a bromomethyl group, an iodomethyl group, and a blocked isocyanate group.

Examples of the hydrophilic group include a hydroxyl group, an amino group, an oxyalkylene group (alkylene group having 2 to 6 carbon atoms), a carboxylic acid group, a sulfonic acid group, a phosphoric acid group, alkali metal and alkaline earth metal bases of carboxylic acid, sulfonic acid, and phosphoric acid, a methylammonium salt group, an ethanolammonium salt group, a triethanolammonium salt group, a tertiary or quaternary amino group having chlorine or bromine, an iodide ion, or an acetate ion as a counter anion, and salts thereof (for example, acetates).

In the tertiary and quaternary amino groups, two or three groups bonded to the nitrogen atom may be the same or different, and are preferably an aliphatic group having 1 to 5 carbon atoms (particularly, an alkyl group), an aromatic group having 6 to 20 carbon atoms (an aryl group), or an araliphatic group having 7 to 25 carbon atoms (particularly, an alkyl group such as a benzyl group (C₆H₅-CH₂-)). In the tertiary amino group and the quaternary amino group, one group bonded to the nitrogen atom may have a carbon-carbon double bond.

An amino group that is a salt is a salt with an acid (organic acid or inorganic acid). Organic acids, for example, carboxylic acids having 1 to 20 carbon atoms (particularly, monocarboxylic acids such as acetic acid, propionic acid, butyric acid, and stearic acid) are preferable.

The reactive/hydrophilic monomer is preferably a fluorine-free monomer.

The reactive/hydrophilic monomer is preferably a monomer (acrylic monomer) represented by the formula:

CH₂=C(-R²²)-C(=O)-Y²¹-(R²³)ₒ(R²¹)ₘ

or

CH₂=C(-R³²)-Y³¹-(H)₅₋ₙ(R³¹)ₙ

wherein R²¹ and R³¹ are each independently a reactive group or a hydrophilic group;
R²² and R³² are a hydrogen atom, a monovalent organic group, or a halogen atom excluding a fluorine atom;
Y²¹ is a direct bond, -O- or -NR'-, wherein R' is H or a hydrocarbon group having 1 to 4 carbon atoms;
R²³ is a group having a direct bond or a divalent to tetravalent hydrocarbon group having 1 to 10 carbon atoms optionally including a hydrocarbon moiety having a substituent;
Y³¹ is a benzene ring;
H is a hydrogen atom;
H and R³¹ are each directly bonded to Y³¹;
m and n are 1 to 3; and
o is 0 or 1.

R²¹ and R³¹ are monovalent groups. Examples of the reactive group or hydrophilic group for R²¹ and R³¹ are as described above.

R²² and R³² may be a hydrogen atom, a methyl group, a halogen atom excluding a fluorine atom, a substituted or unsubstituted benzyl group, or a substituted or unsubstituted phenyl group. Examples of R²² and R³² include a hydrogen atom, a methyl group, a chlorine atom, a bromine atom, an iodine atom, and a cyano group. R²² and R³² are preferably a hydrogen atom, a methyl group, or a chlorine atom. From the viewpoint of exhibition of oil-resistance, R²² is more preferably a hydrogen atom.

Y²¹ is preferably -O- or -NH-.

R²³ is preferably a divalent to tetravalent hydrocarbon group having 1 to 10 carbon atoms optionally including a hydrocarbon moiety having a substituent. Examples of the divalent to tetravalent hydrocarbon group having 1 carbon atom include -CH₂-, -CH= having a branched structure, and -C≡ having a branched structure. R²³ is preferably a divalent alkylene group, for example, -(CH₂)ᵣ-, wherein r is a number of 1 to 5, or a divalent, trivalent, or tetravalent alkyl group, for example, - (CH₂)ᵣ-(CH-)ₛ-, wherein r is a number of 1 to 5, and s is 1, 2 or 3, and position of the CH₂ group and CH- group may not be in the order described.

Y³¹ is a benzene ring. The monomer having Y³¹ has a styryl group. In the monomer having Y³¹, one to three R³¹ groups and 2 to 4 hydrogen atoms are bonded to the benzene ring.

R²¹ may be a group containing an oxyalkylene group (alkylene group having 2 to 6 carbon atoms). Thus, the reactive/hydrophilic monomer may be an oxyalkylene group-containing monomer represented by the formula:

CH₂=CR⁴²-C(=O)-O-(RO)ₙ-X⁴¹

wherein X⁴¹ is a hydrogen atom or an unsaturated or saturated hydrocarbon group having 1 to 22 carbon atoms;
R⁴² is a hydrogen atom or a methyl group;
R is an alkylene group having 2 to 6 carbon atoms; and
n is an integer of 1 to 90.

X⁴¹ is preferably a hydrogen atom or a methyl group.

In the oxyalkylene group-containing monomer, n may be, for example, 1 to 50, particularly 1 to 30, and especially 1 to 15 or 2 to 15.

R may be a linear or branched alkylene group, for example of the formula -(CH₂CH₂)ₓ-, -(CH₂-CH(CH₃))ₓ-, or - (CH(CH₃)-CH₂)ₓ, wherein x is 1 to 3, for example, 1 to 2.

In -(RO)ₙ-, R may be two or more kinds, and -(RO)ₙmay be, for example, a combination of -(R¹O)ₙ₁-and - (R²O)ₙ₂-, wherein R¹ and R² are different from each other, and are alkylene groups having 2 to 6 carbon atoms, n1 and n2 are numbers of 1 or more, and the sum of n1 and n2 is 2 to 90.

Examples of the oxyalkylene group-containing monomer are as follows.

CH₂=CR⁴²COO-(CH₂CH₂O)ₙ-H

CH₂=CR⁴²COO-(CH₂CH₂O)ₙ-CH₃

CH₂=CR⁴²COO-(CH₂CH(CH₃)O)ₙ-H

CH₂=CR⁴²COO-((CH₂CH₂O)ₓ₁-(CH₂CH(CH₃)O)ₓ₂)ₙ-H

CH₂=CR⁴²COO-(CH₂CH(CH₃)O)ₙ-CH₃

CH₂=CR⁴²COO-((CH₂CH₂O)ₓ₁-(CH₂CH(CH₃)O)ₓ₂)ₙ-CH₃

CH₂=CR⁴²COO-((CH₂CH₂O)ₓ₁-(CH (CH₃)CH₂O)ₓ₂)ₙ-CH₃

CH₂=CR⁴²COO-((CH₂CH₂O)ₓ₁-(CH (CH₃)CH₂O)ₓ₂)ₙ-H

wherein R⁴² is a hydrogen atom or a methyl group;
n is an integer of 1 to 90; and
x1 and x2 are each 1 or more, and the sum of x1 and x2 is 2 to 3.

Specific examples of the reactive/hydrophilic monomer include glycidyl (meth)acrylate, glycerol (meth)acrylate, hydroxymethyl (meth)acrylate, hydroxyethyl (meth)acrylate, 3-hydroxypropyl (meth)acrylate, 2-hydroxypropyl (meth)acrylate, 2,3-dihydroxypropyl (meth)acrylate, 3-chloro-2-hydroxypropyl (meth)acrylate, 3-hydroxybutyl (meth)acrylate, 4-hydroxybutyl (meth)acrylate, 2-hydroxybutyl (meth)acrylate, 2-acetoacetoxyethyl (meth)acrylate, 4-hydroxybutyl acrylate glycidyl ether, acrylic acid, methacrylic acid, trimethylsilyl (meth)acrylate, 2-(trimethylsilyloxy)ethyl (meth)acrylate, 2-(dimethylamino)ethyl (meth)acrylate, 2-(tert-butylamino)ethyl (meth)acrylate, dimethylaminoethyl methacrylate quaternary products, tetrahydrofurfuryl (meth)acrylate,
hydroxymethyl (meth)acrylamide, hydroxyethyl (meth)acrylamide, 3-hydroxypropyl (meth)acrylamide, 2-hydroxypropyl (meth)acrylamide, 2, 3-dihydroxypropyl (meth)acrylamide, 3-chloro-2-hydroxypropyl (meth)acrylamide, 3-hydroxybutyl (meth)acrylamide, 4-hydroxybutyl (meth)acrylamide, 2-hydroxybutyl (meth)acrylamide, 2-acetoacetoxyethyl (meth)acrylamide, t-butylacrylamide, diacetoneacrylamide, and
4-hydroxymethylstyrene, 4-hydroxyethylstyrene, 4-aminomethylstyrene, 4-aminoethylstyrene, 2-(4-vinylphenyl)oxirane, 2-(4-vinylbenzoyl)oxirane,
CH₂=CHCOO-CH₂CH₂-N(CH₃)₂ and salts thereof (for example, acetates),
CH₂=CHCOO-CH₂CH₂-N(CH₂CH₃)₂ and salts thereof (for example, acetates),
CH₂=C(CH₃)COO-CH₂CH₂-N(CH₃)₂ and salts thereof (for example, acetates),
CH₂=C(CH₃)COO-CH₂CH₂-N(CH₂CH₃)₂ and salts thereof (for example, acetates),
CH₂=CHCO-NH-CH₂CH₂CH₂-N(CH₃)₂ and salts thereof (for example, acetates),
CH₂=CHCOO-CH₂CH₂-N(CH₃)(CH₂C₆H₅) and salts thereof (for example, acetates),
CH₂=C(CH₃)COO-CH₂CH₂-N(CH₂CH₃)(CH₂C₆H₅) and salts thereof (for example, acetates),
CH₂=CHCOO-CH₂CH₂-N⁺(CH₃)₃Cl⁻,
CH₂=CHCOO-CH₂CH₂-N⁺(CH₃)₂(CH₂C₆H₅)Cl⁻,
CH₂=C(CH₃)COO-CH₂CH₂-N⁺(CH₃)₃Cl⁻,
CH₂=CHCOO-CH₂CH(OH)CH₂-N⁺(CH₃)₃Cl⁻,
CH₂=C(CH₃)COO-CH₂CH(OH)CH₂-N⁺(CH₃)₃Cl⁻,
CH₂=C(CH₃)COO-CH₂CH(OH)CH₂-N⁺(CH₂CH₃)₂(CH₂C₆H₅)Cl⁻,
CH₂=C(CH₃)COO-CH₂CH₂-N⁺(CH₃)₃Br⁻,
CH₂=C(CH₃)COO-CH₂CH₂-N⁺(CH₃)₃I⁻,
CH₂=C(CH₃)COO-CH₂CH₂-N⁺(CH₃)₃O⁻SO₃CH₃, and
CH₂=C(CH₃)COO-CH₂CH₂-N⁺(CH₃)(CH₂C₆H₅)₂Br⁻.

Particularly preferred are hydroxyethyl acrylate, hydroxypropyl acrylate, hydroxybutyl acrylate, hydroxyethyl acrylamide or dimethylaminoethyl methacrylate and salts thereof (for example, acetates).

### (3) Crosslinkable monomer

The crosslinkable monomer is a compound having at least two (particularly two, three or four) ethylenically unsaturated double bonds. The crosslinkable monomer is preferably a fluorine-free monomer.

The crosslinkable monomer is preferably a monomer represented by the formula: 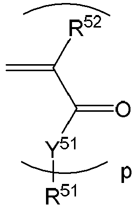 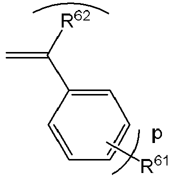 or 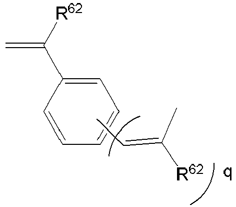
wherein R⁵¹ and R⁶¹ are each independently a direct bond or a divalent to tetravalent group composed of at least one selected from a hydrocarbon group having 1 to 20 carbon atoms optionally including a hydrocarbon moiety having a substituent; -(CH₂CH₂O)ᵣ-, wherein r is an integer of 1 to 10, -C₆H₄-, -O-, or -NR'-, wherein R' is H or a hydrocarbon group having 1 to 4 carbon atoms;
R⁵² and R⁶² are each independently a hydrogen atom, a monovalent organic group, or a halogen atom excluding a fluorine atom;
Y⁵¹ is -O- or -NR'-, wherein R' is H or a hydrocarbon group having 1 to 4 carbon atoms;
p is 2 to 4; and
q is 1 to 5.

Examples of R⁵¹ and R⁶¹ are a direct bond, a divalent to tetravalent (for examples, divalent to trivalent) hydrocarbon group having 1 to 20 (or 2 to 10) carbon atoms which may be interrupted by an oxygen atom and/or whose hydrogen atom may be substituted by a substituent, an ethylene glycol group, a propylene glycol group, a glycerol group, a cyclohexyl group, a dicyclopentanyl group, an adamantyl group, an isobornyl group, a naphthalene group, a bornyl group, a tricyclodecanyl group, and a phenyl group, or a group containing any of these groups. R⁵¹ and R⁶¹ may be a polyethylene glycol group having 2 to 10 repeating units.

R⁵² and R⁶² may each independently be a hydrogen atom, a methyl group, a halogen atom excluding a fluorine atom, a substituted or unsubstituted benzyl group, or a substituted or unsubstituted phenyl group. Examples of R⁵² and R⁶² include a hydrogen atom, a methyl group, a chlorine atom, a bromine atom, an iodine atom, and a cyano group. R⁵² and R⁶² is preferably a hydrogen atom, a methyl group or a chlorine atom. R⁵² and R⁶² is more preferably a hydrogen atom from the viewpoint of oil-resistance.

Y⁵¹ is preferably -O- or -NH-.

Specific examples of the crosslinkable monomer include divinylbenzene, 1,4-butanediol di(meth)acrylate, 1,6-hexanediol di(meth)acrylate, 1,9-nonanediol di(meth)acrylate, neopentyl glycol di(meth)acrylate, polyethylene glycol di(meth)acrylate, triethylene glycol di(meth)acrylate, ethylene glycol di(meth)acrylate, methylene glycol di(meth)acrylate, polytetramethylene glycol di(meth)acrylate, dimethyloltricyclodecane di(meth)acrylate, trimethylolpropane tri(meth)acrylate, adamantyl di(meth)acrylate, glycerin di(meth)acrylate, tricyclodecane dimethanol di(meth)acrylate, dicyclopentanyl di(meth)acrylate, and 5-hydroxy-1,3-adamantane di(meth)acrylate.

The crosslinkable monomer is preferably di(meth)acrylate.

### (4) Further monomers

Further monomers other than the monomers (1) to (3) may also be used.

Examples of the further monomers include ethylene, vinyl acetate, acrylonitrile, vinyl chloride, styrene, polyethylene glycol (meth)acrylate, polypropylene glycol (meth)acrylate, methoxypolyethylene glycol (meth)acrylate, methoxypolypropylene glycol (meth)acrylate, methyl (meth)acrylate, and vinyl alkyl ether. The further monomer is preferably a fluorine-free monomer. Further monomers are not limited to these examples.

As used herein, the term "(meth)acrylate" means acrylate or methacrylate, the term "(meth)acrylamide" means acrylamide or methacrylamide, and the term "acrylic compound" means a compound having an acryloyl group, and generally means an acrylate compound, a methacrylate compound, an acrylamide compound, or a methacrylamide compound.

Each of the monomers (1) to (4) may be made of a single compound or a mixture of two or more kinds.

The amounts of the monomers (1) to (3) based on the polymer may be as follows.
Monomer (1): 40 mol% or more, 50 mol% or more, 60 mol% or more, 70 mol% or more, or 80 mol% or more (the lower limit may be 10 mol%, 20 mol%, 30 mol%, 40 mol%, 50 mol%, or 60 mol%, and the upper limit may be 99 mol%, 95 mol%, 90 mol%, 85 mol%, 80 mol%, 75 mol%, 70 mol%, or 65 mol%)
Monomer (2): 0 to 50 mol%, 2 to 40 mol%, or 2 to 30 mol% (the lower limit may be 1 mol%, 2 mol%, 3 mol%, 5 mol%, 8 mol%, 10 mol%, 12 mol%, or 15 mol%, and the upper limit may be 50 mol%, 45 mol%, 40 mol%, 35 mol%, 30 mol%, 25 mol%, 20 mol%, or 15 mol%)
Monomer (3): 0 to 30 mol%, 0 to 20 mol%, or 1 to 10 mol% (the lower limit may be 1 mol%, 2 mol%, 3 mol%, 5 mol%, 8 mol%, 10 mol%, 12 mol%, or 15 mol%, and the upper limit may be 40 mol%, 35 mol%, 30 mol%, 25 mol%, 20 mol%, 15 mol%, 10 mol%, or 5 mol%)

The monomer (1) contributes to the exhibition of oil-resistance, the monomer (2) contributes to the adhesion to a substrate such as paper or fabric and the dispersibility to a solvent such as water, and possibly to the improvement of oil-resistance, and the monomer (3) contributes to the improvement of heat resistance of oil-resistance. Therefore, the composition of the monomer is selected in consideration of the balance of the required performance.

The amount of the further monomer (4) may be 0 to 20% by weight, for example, 0.1 to 15% by weight or 1 to 10% by weight, based on the oil-resistant polymer.

The weight-average molecular weight of the oil-resistant polymer may be 1,000 to 1,000,000, preferably 5,000 to 800,000, and more preferably 30,000 to 800,000. The weight-average molecular weight is a value obtained by gel permeation chromatography in terms of polystyrene.

The polymerization of the oil-resistant polymer is not limited, and various polymerization methods such as bulk polymerization, solution polymerization, emulsion polymerization, and radiation polymerization can be selected. For example, solution polymerization using an organic solvent or emulsion polymerization using water or a combination of an organic solvent and water is generally selected. The polymerized product is diluted with water and emulsified in water to prepare a treatment liquid.

After the polymerization (for example, solution polymerization, emulsion polymerization, or solution polymerization), the polymer may be dispersed in water by adding water and then removing the solvent. Self-dispersing products can be produced without the need to add emulsifiers (dispersants).

Examples of the organic solvent include ketones such as acetone and methyl ethyl ketone; esters such as ethyl acetate and methyl acetate; glycols such as propylene glycol, dipropylene glycol monomethyl ether, N-methyl-2-pyrrolidone (NMP), dipropylene glycol, tripropylene glycol, and low molecular weight polyethylene glycol; alcohols such as ethyl alcohol and isopropanol; and toluene, 1,3-dioxane, and 1,4-dioxane.

As the polymerization initiator, for example, a peroxide, an azo compound, or a persulfate compound may be used. The polymerization initiator is generally water-soluble and/or oil-soluble.

Preferred specific examples of the oil-soluble polymerization initiator include 2,2'-azobis(2-methylpropionitrile), 2,2'-azobis(2-methylbutyronitrile), 2,2'-azobis(2,4-dimethylvaleronitrile), 2,2'-azobis(2,4-dimethyl-4-methoxyvaleronitrile), 1,1'-azobis(cyclohexane-1-carbonitrile), dimethyl 2,2'-azobis(2-methylpropionate), 2,2'-azobis(2-isobutyronitrile), benzoyl peroxide, di-tert-butyl peroxide, lauryl peroxide, cumene hydroperoxide, t-butyl peroxypivalate, diisopropyl peroxydicarbonate, and t-butyl perpivalate.

Preferred specific examples of the water-soluble polymerization initiator include 2,2'-azobisisobutylamidine dihydrochloride, 2,2'-azobis(2-methylpropionamidine)hydrochloride, 2,2'-azobis[2-(2-imidazolin-2-yl)propane]hydrochloride, 2,2'-azobis[2-(2-imidazolin-2-yl)propane]sulfate hydrate, 2,2'-azobis[2-(5-methyl-2-imidazolin-2-yl)propane]hydrochloride, potassium persulfate, barium persulfate, ammonium persulfate, and hydrogen peroxide.

The polymerization initiator is used in the range of 0.01 to 5 parts by mol based on 100 parts by mol of the monomer.

In addition, for the purpose of adjusting the molecular weight, a chain transfer agent, for example, a mercapto group-containing compound may be used, and specific examples thereof include 2-mercaptoethanol, thiopropionic acid, and alkyl mercaptan. The mercapto group-containing compound is used in the range of 10 parts by mol or less, or 0.01 to 5 parts by mol, based on 100 parts by mol of the monomer.

Specifically, the oil-resistant polymer can be produced as follows.

In the solution polymerization, a method is employed in which a monomer is dissolved in an organic solvent, and after nitrogen substitution, a polymerization initiator is added, followed by heating and stirring, for example, in a range of 40 to 120°C for 1 to 10 hours. In general, the polymerization initiator is preferably an oil-soluble polymerization initiator.

Examples of the organic solvent include those that are inert to the monomers and dissolve them, including ketones such as acetone and methyl ethyl ketone; esters such as ethyl acetate and methyl acetate; glycols such as propylene glycol, dipropylene glycol monomethyl ether, N-methyl-2-pyrrolidone (NMP), dipropylene glycol, tripropylene glycol, and low molecular weight polyethylene glycol; alcohols such as ethyl alcohol and isopropanol; and hydrocarbon solvents such as n-heptane, n-hexane, n-octane, cyclohexane, methylcyclohexane, cyclopentane, methylcyclopentane, methylpentane, 2-ethylpentane, isoparaffin-based hydrocarbons, liquid paraffin, decane, undecane, dodecane, mineral spirit, mineral turpentine, and naphtha. Preferred examples of the solvent include acetone, chloroform, isopropyl alcohol, pentane, hexane, heptane, octane, cyclohexane, benzene, toluene, xylene, petroleum ether, tetrahydrofuran, 1,4-dioxane, methyl ethyl ketone, methyl isobutyl ketone, ethyl acetate, butyl acetate, 1,1,2,2-tetrachloroethane, 1,1,1-trichloroethane, trichloroethylene, perchloroethylene, N-methyl-2-pyrrolidone (NMP), dipropylene glycol monomethyl ether (DPM), and 1,3-dioxane. The organic solvent is used such that the concentration of the monomer in the solution represented by (monomer)/(organic solvent + monomer) is in the range of 3 to 80% by weight, 5 to 70% by weight, or 10 to 60% by weight.

In the emulsion polymerization, a method is employed in which a monomer is emulsified in water in the presence of an emulsifier or the like, and after nitrogen substitution, a polymerization initiator is added, and polymerization is performed by stirring in a range of 40 to 80°C for 1 to 10 hours. Examples of the polymerization initiator include:
water-soluble polymerization initiators such as 2,2'-azobisisobutylamidine dihydrochloride, 2,2'-azobis(2-methylpropionamidine)hydrochloride, 2,2'-azobis[2-(2-imidazolin-2-yl)propane]hydrochloride, 2,2'-azobis[2-(2-imidazolin-2-yl)propane]sulfate hydrate, 4,4'-azobis(4-cyanovaleric acid), 2,2'-azobis[2-(5-methyl-2-imidazolin-2-yl)propane]hydrochloride, potassium persulfate, barium persulfate, ammonium persulfate, and hydrogen peroxide; and
oil-soluble polymerization initiators such as 2,2'-azobis(2-methylpropionitrile), 2,2'-azobis(2-methylbutyronitrile), 2,2'-azobis(2,4-dimethylvaleronitrile), 2,2'-azobis(2,4-dimethyl-4-methoxyvaleronitrile), 1,1'-azobis(cyclohexane-1-carbonitrile), dimethyl 2,2'-azobis(2-methylpropionate), 2,2'-azobis(2-isobutyronitrile), benzoyl peroxide, di-tert-butyl peroxide, lauryl peroxide, cumene hydroperoxide, t-butyl peroxypivalate, diisopropyl peroxydicarbonate, and t-butyl perpivalate.

The polymerization initiator is used in the range of 0.01 to 10 parts by mol based on 100 parts by mol of the monomer.

In order to obtain an aqueous dispersion of a polymer having excellent storage stability, it is desirable that a monomer is formed into fine particles in water by using an emulsifying apparatus capable of applying strong crushing energy, such as a high-pressure homogenizer or an ultrasonic homogenizer, and then polymerized by using an oil-soluble polymerization initiator. Further, as the emulsifier, various anionic, cationic, or nonionic emulsifiers can be used, and the emulsifier is used in a range of 0.5 to 20 parts by weight based on 100 parts by weight of the monomer. The use of anionic and/or nonionic and/or cationic emulsifiers is preferred. When the monomers are not completely compatible with each other, it is preferable to add a compatibilizer, for example, a water-soluble organic solvent or a low molecular weight monomer, which is sufficiently compatible with these monomers. The addition of compatibilizers can improve emulsifiability and copolymerizability.

Examples of the water-soluble organic solvent include acetone, propylene glycol, dipropylene glycol monomethyl ether (DPM), dipropylene glycol, tripropylene glycol, ethanol, N-methyl-2-pyrrolidone (NMP), 3-methoxy-3-methyl-1-butanol, and isoprene glycol, and the water-soluble organic solvent may be used in the range of 1 to 50 parts by weight, for example, 2 to 40 parts by weight, based on 100 parts by weight of water. By adding NMP or DPM or 3-methoxy-3-methyl-1-butanol or tripropylene glycol or isoprene glycol (a preferred amount is, for example, 1 to 20 parts by weight, particularly 3 to 10 parts by weight, based on 100 parts by weight of the total amount of the monomers), the stability of the composition (particularly the emulsion) is improved. Examples of the low molecular weight monomer include methyl methacrylate and glycidyl methacrylate, which may be used in the range of 1 to 50 parts by weight, for example, 2 to 40 parts by weight, based on 100 parts by weight of the total amount of the monomers.

The oil-resistant agent is preferably in the form of a solution, emulsion, or aerosol. The oil-resistant agent comprises an oil-resistant compound and a medium (for example, a liquid medium such as an organic solvent and water). The oil-resistant agent is preferably a water dispersion of an oil-resistant compound.

In the oil-resistant agent, the concentration of the oil-resistant compound may be, for example, 0.01 to 500 by weight. The oil-resistant agent preferably does not contain an emulsifier, but may contain an emulsifier.

The removal of the organic solvent in the oil-resistant compound solution can be performed by heating the oil-resistant compound solution (preferably under reduced pressure) (for example, to 30°C or more, for example, 50 to 120°C).

The oil-resistant agent may contain a cross-linking agent.

The cross-linking agent is preferably a cross-linking agent which crosslinks when heated after the substrate is treated with the water dispersion of the oil-resistant compound. The cross-linking agent itself is also preferably dispersed in water.

A preferred example of the cross-linking agent is a blocked isocyanate compound. The blocked isocyanate compounds can be produced by reacting
[A(NCO)ₘ, wherein A is a group remaining after the isocyanate group is removed from the polyisocyanate, and m is an integer of 2 to 8] isocyanate with [RH, wherein R may be a hydrocarbon group which may be substituted by a heteroatom such as a nitrogen atom or an oxygen atom, and H is a hydrogen atom] a blocking agent.

A(NCO)ₘ is, for example, tolylene diisocyanate (TDI), diphenylmethane diisocyanate (MDI), hexamethylene diisocyanate (HDI), or the like.

Examples of the blocking agent which forms the R group include oximes, phenols, alcohols, mercaptans, amides, imides, imidazoles, ureas, amines, imines, pyrazoles and active methylene compounds.

The cross-linking agent is preferably a blocked isocyanate such as oxime blocked toluene diisocyanate, blocked hexamethylene diisocyanate, or blocked diphenylmethane diisocyanate.

The amount of the cross-linking agent may be 0 to 30 parts by weight or 0.01 to 20 parts by weight, for example, 0.1 to 18 parts by weight, based on 100 parts by weight of the oil-resistant compound. Alternatively, the amount of the cross-linking agent is preferably used such that the ratio of the -NCO group of the cross-linking agent to the -OH group, the epoxy group, or the amino group of the oil-resistant compound is in the range of 0.1 to 3.0 equivalents, 0.1 to 1.5 equivalents, or 0.1 to 1.0 equivalents.

The oil-resistant agent can be used to treat (for example, surface treatment) a paper substrate or fabric.

The oil-resistant agent can be applied to the treatment target by a conventionally known method. Usually, a method in which the oil-resistant agent is dispersed and diluted in an organic solvent or water, adhered to the surface of the treatment target by a known method such as dip coating, spray coating, or foam coating, and dried is employed (surface treatment).

Examples of the paper substrate of the treatment target include paper, a container formed of paper, and a formed body made of paper (for example, a molded pulp). Examples of the fabric substrate of the treatment target include animal and plant natural fibers such as cotton, hemp, wool and silk, synthetic fibers such as polyamide, polyester, polyvinyl alcohol, polyacrylonitrile, polyvinyl chloride, and polypropylene, semi-synthetic fibers such as rayon and acetate, inorganic fibers such as glass fibers and carbon fibers, and mixed fibers thereof. Fabric products include woven, knitted and nonwoven fabrics, fabrics in the form of articles of clothing and carpets, but the treatment may also be performed on fibers, yarns, intermediate textile products (such as slivers or rovings, for example) in a state prior to being made into a fabric.

The oil-resistant compound of the present disclosure adheres well to paper substrates.

The paper can be produced by a conventionally known papermaking method. An internal addition treatment method in which an oil-resistant agent is added to pulp slurry before papermaking or an external addition treatment method in which an oil-resistant agent is applied to paper after papermaking can be used.

The size press in the external addition treatment method may be classified as follows depending on the coating mode.

One coating mode is a so-called pond-type two-roll size press in which a coating liquid (sizing liquid) is supplied to a nip part formed when paper is passed between two rubber rolls to form a coating liquid reserve called a pond, and the paper is passed through this coating liquid reserve to apply the sizing liquid to both surfaces of the paper. Another coating mode is a gate roll-type size press and a rod metering size press in which the sizing liquid is applied by being surface-transferred. In the pond-type two-roll size press, the sizing liquid easily reaches into the inside of paper, and in the surface transfer type, the sizing liquid components easily remains on the paper surface. With the surface transfer type, the coating layer more likely remains on the paper surface than with the pond-type two-roll size press, and a larger amount of the oil-resistant layer is formed on the surface than with the pond-type two-roll size press.

In the present disclosure, oil-resistance can be imparted to paper even when the former pond-type two-roll size press is used.

The paper thus treated exhibits excellent oil-resistance and water-resistance after rough drying at room temperature or high temperature, optionally accompanied with a heat treatment that can take a temperature range of up to 300°C, for example, up to 200°C, particularly 80°C to 180°C, depending on the properties of the paper.

The present disclosure can be used in gypsum board base paper, coated base paper, medium quality paper, commonly used liner and corrugating medium, neutral machine glazed paper, neutral liner, rustproof liner and metal laminated paper, Kraft paper, and the like. The present disclosure can also be used in neutral printing writing paper, neutral coated base paper, neutral PPC paper, neutral heat sensitive paper, neutral pressure sensitive base paper, neutral inkjet paper, and neutral communication paper.

The pulp raw material may be any of bleached or unbleached chemical pulp such as Kraft pulp or sulfite pulp, bleached or unbleached high yield pulp such as ground pulp, mechanical pulp, or thermomechanical pulp, and waste paper pulp such as waste newspaper, waste magazine, waste corrugated cardboard, or waste deinked paper. A mixture of the above pulp raw material and synthetic fiber of asbestos, polyamide, polyimide, polyester, polyolefin, polyvinyl alcohol, or the like can be used as well.

Sizing agents can be added to the pulp raw material to improve the water-resistance of the paper. Examples of the sizing agent include cationic sizing agents, anionic sizing agents, and rosin-based sizing agents (for example, acidic rosin-based sizing agents and neutral rosin-based sizing agents). The amount of the sizing agent may be 0.01 to 5% by weight based on the pulp.

If necessary, additives which are used in paper making, such as paper strengthening agents, such as starch, modified starch, carboxymethyl cellulose, and polyamide polyamine-epichlorohydrin resin, flocculants, fixing agents, retention agents, dyes, fluorescent dyes, slime control agents, and antifoaming agents can be used to such an extent that they are usually used as paper making chemicals. Starch and modified starch are preferably used.

If necessary, by using starch, polyvinyl alcohol, a dye, a coating color, an antislip agent, or the like, the oil-resistant agent can be applied to paper by a size press, a gate roll coater, a bill blade coater, a calendar, or the like.

In the external addition, the amount of the oil-resistant compound contained in the oil-resistant layer is preferably 0.01 to 2.0 g/m², particularly preferably 0.1 to 1.0 g/m². The oil-resistant layer preferably contains an oil-resistant agent and starch and/or modified starch. The solids content of the oil-resistant agent in the oil-resistant layer is preferably 2 g/m² or less.

In the internal addition, the oil-resistant agent is preferably mixed with the pulp such that the amount of the oil-resistant agent is 0.01 to 50 parts by weight or 0.01 to 30 parts by weight, for example, 0.01 to 10 parts by weight based on 100 parts by weight of the pulp forming the paper.

In the external addition and the internal addition, the weight ratio of the starch and the modified starch to the oil-resistant compound may be 10:90 to 98:2.

In the external addition, oil-resistance can also be imparted to paper by using a so-called pond-type two-roll size press treatment in which the treatment liquid is stored between rolls, and base paper is passed through the treatment liquid between the rolls at a given roll speed and nip pressure.

The oil-resistant compound may be nonionic, cationic, anionic, or amphoteric. In the external addition treatment, the paper substrate may comprise additives such as sizing agents, paper strengthening agents, flocculants, retention agents, or coagulants. The additives may be nonionic, cationic, anionic, or amphoteric. The ionic charge density of additives may be -10,000 to 10,000 peq/g, preferably -4,000 to 8,000 peq/g, and more preferably -1,000 to 7,000 peq/g. Additives (solid contents or active components) such as a sizing agent, a paper strengthening agent, a flocculant, a retention agent, or a coagulant can be used, in general, in an amount of 0.1 to 10% by weight (for example, 0.2 to 5.0% by weight), based on the pulp. In the case of a paper substrate comprising a cationic additive (such as a sizing agent, a paper strengthening agent, a flocculant, a retention agent, or a coagulant), the oil-resistant agent is preferably anionic.

In the internal addition treatment, a pulp slurry having a pulp concentration of 0.5 to 5.0% by weight (for example, 2.5 to 4.0% by weight) is preferably formed into paper. Additives (such as a sizing agent, a paper strengthening agent, a flocculant, a retention agent, or a coagulant) and the oil-resistant compound can be added to the pulp slurry. Since pulp is generally anionic, at least one of the additives and the oil-resistant compound is preferably cationic or amphoteric so that the additive and the oil-resistant compound are favorably fixed to the paper. A combination of a cationic or amphoteric additive and an anionic oil-resistant compound, a combination of an anionic additive and a cationic or amphoteric oil-resistant compound, and a combination of a cationic or amphoteric additive and oil-resistant compound are preferably used. Paper is made more preferably at an ionic charge density of the additive constituting a sizing agent, a paper strengthening agent, a flocculant, a retention agent, or a coagulant being - 1,000 to 7,000 peq/g, and paper is made more preferably at an ionic charge density of 100 to 1,000 peq/g (such as 330 peq/g, 420 peq/g, or 680 peq/g).

Examples of additives (such as a sizing agent, a paper strengthening agent, a flocculant, a retention agent, or a coagulant) include alkylketene dimers, alkenylsuccinic anhydrides, styrene polymers (styrene/maleic acid polymers, styrene/acrylic acid polymers), urea-formaldehyde polymers, polyethyleneimines, melamine-formaldehyde polymers, polyamidoamine-epichlorohydrin polymers, polyacrylamide polymers, polyamine polymers, polydiallyldimethylammonium chloride, alkylamine/epichlorohydrin condensates, condensates of alkylene dichlorides and polyalkylene polyamines, dicyandiamide/formalin condensates, dimethyldiallylammonium chloride polymers, and olefin/maleic anhydride polymers.

In the present disclosure, the treatment target is treated with the oil-resistant agent. The term "treatment" means applying the oil-resistant agent to the treatment target by dipping, spraying, coating, or the like. By the treatment, the oil-resistant compound, which is the active ingredient of the oil-resistant agent, reaches the inside of the treatment target and/or adheres to the surface of the treatment target.

### Examples

Next, the present disclosure will now be described in detail by way of Examples, Comparative Examples, and Test Examples. However, the description of these does not limit the present disclosure.

Below, parts, %, or ratios indicate parts by weight, % by weight, or weight ratios unless otherwise specified.

The test methods used below are as follows.

### [Measurement of thermal properties by differential scanning calorimetry (DSC)]

The melting point, crystallization temperature, and glass transition temperature of the oil-resistant compound were calculated by differential scanning calorimetry (DSC). DSC measurements were performed under a nitrogen atmosphere, after cooling to -20°C and then increasing the temperature to 200°C at 10°C/min and then cooling again to -20°C, by measuring the melting point observed during the subsequent 10°C/min temperature increase to 200°C. In the case of a polymer showing a plurality of melting peaks, the peak having the largest quantity of heat of melting was taken as the melting point. The width of the temperature of the melting point peak at half height of the baseline and the peak top was taken as the half width of the peak.

### [Measurement of crystal state by X-ray diffraction (XRD)]

The crystalline state of the oil-resistant compound was measured by X-ray diffraction (XRD) using SmartLab manufactured by RIGAKU Corporation at a measurement temperature of 25°C. CuKα radiation was used. The variable-temperature XRD (XRD-DSC) measurement was performed under a nitrogen atmosphere, after cooling to - 20°C and then increasing the temperature to a predetermined temperature at 5°C/min. The 2θ width of the peak at half intensity of the baseline and the peak top was taken as the half width of the peak.

### [Measurement of static contact angle]

The static contact angle was measured by spin-coating a chloroform solution or methanol solution of the obtained oil-resistant compound having a solid content concentration of 1.0% on a silicon wafer substrate. The static contact angle was measured by dropping 2 µL of hexadecane on the coating film at a measurement temperature of 25°C and measuring the contact angle 1 second after the dropping using a fully automatic contact angle meter (DropMaster701, manufactured by Kyowa Interface Science Co., Ltd.).

### [Measurement of high-temperature contact angle]

### (measurement of temperature-variable contact angle)

In the same manner as in the static contact angle measurement, a sample was applied onto a silicon wafer substrate, 2 µL of hexadecane was dropped onto the coating film, the temperature of the silicon wafer substrate was set to a predetermined temperature, and then the contact angle after 1 minute was measured using a fully automatic contact angle meter (DropMaster701, manufactured by Kyowa Interface Science Co., Ltd.).

### [Preparation of treated paper]

As wood pulp, a pulp slurry was prepared which had a weight ratio of LBKP (leaf bleached Kraft pulp) and NBKP (needle bleached Kraft pulp) of 60% by weight and 40% by weight and a pulp freeness (Canadian Standard Freeness) of 400 ml, a paper wet strengthening agent and a sizing agent were added to this pulp slurry, and paper having a paper density of 0.58 g/cm³ and a basis weight of 45 g/m² made by a fourdrinier paper machine was used as base paper for an external addition treatment (size press treatment). This base paper had an oil-resistance (KIT value) of 0 and a water-resistance (a Cobb value) of 52 g/m². This base paper was coated with 14.9 mg/cm³ of the oil-resistant agent compound solution (in chloroform or methanol solvent) using a Baker-type applicator with a gap of 0 mil, and annealed at 70°C or 140°C for 10 minutes to prepare treated paper.

### [KIT test (oil-resistance)]

The oil-resistance was measured by 3M kit test (TAPPI T-559cm-02). In the 3M kit test method, a test oil mixed with caster oil, toluene, and heptane was placed on the surface of the treated paper, and after 15 seconds, the test oil was wiped off, and evaluation was made based on the presence or absence of oil stain on the treated paper. The test was performed using the test oils from kit numbers 1 to 6, and the largest kit number with no stain was used as the evaluation result for oil-resistance. The higher the value of the KIT test is, the higher the oil-resistance is.

### Mixing ratio (vol%)

| Oil-resistivity (KIT test liquid) | Castor oil | Toluene | Heptane |
|---|---|---|---|
| 1 | 100 | 0 | 0 |
| 2 | 90 | 5 | 5 |
| 3 | 80 | 10 | 10 |
| 4 | 70 | 15 | 15 |
| 5 | 60 | 20 | 20 |
| 6 | 50 | 25 | 25 |
| 7 | 40 | 30 | 30 |
| 8 | 30 | 35 | 35 |
| 9 | 20 | 40 | 40 |
| 10 | 10 | 45 | 45 |
| 11 | 0 | 45 | 55 |
| 12 | 0 | 50 | 50 |

### [Evaluation of corn oil-resistance (oil-resistance)]

At a measurement temperature of 25°C, corn oil was placed on the surface of the treated paper, and after 15 seconds, the test oil was wiped off, and evaluation was made based on the presence or absence of oil stain on the treated paper. When there was no stain, the paper was rated as "A", and when a stain was observed, the paper was rated as "C".

### [70°C oil-resistant thin paper test (high-temperature oil-resistance I)]

Corn oil at 70°C was placed on the surface of treated paper and the treated paper was held in an oven at 70°C, and the time until the corn oil permeated was measured.

### [High-temperature oil-resistant thin paper test (high-temperature oil-resistance II)]

Corn oil at a predetermined temperature was placed on the surface of treated paper, and the treated paper was held in an oven at a predetermined temperature for 1 minute, and the presence or absence of oil stain on the treated paper was visually evaluated. The highest temperature at which no permeation was observed was taken as the evaluation result of high-temperature oil-resistance. The measurement was performed at intervals of 10°C.

### [25°C corn oil dissolution test]

The solubility of 0.01 g of the oil-resistant compound in 1.00 g of corn oil at 25°C was visually observed. After stirring at 25°C for 5 minutes, the case where the oil-resistant compound was not dissolved by visual observation (including the case where the oil-resistant compound was partially dissolved and partially remained undissolved) was evaluated as "insoluble (A)", and the case where the oil-resistant compound was fully dissolved was evaluated as "dissolved (C)".

### [120°C corn oil dissolution test (high-temperature oil-resistance III)]

The solubility of 0.01 g of the oil-resistant compound in 1.00 g of corn oil at 120°C was visually observed. After stirring at 120°C for 5 minutes, the case where the oil-resistant compound was not dissolved by visual observation (including the case where the oil-resistant compound was partially dissolved and partially remained undissolved) was evaluated as "insoluble (A)", and the case where the oil-resistant compound was fully dissolved was evaluated as "dissolved (C)".

### [Paper dish test oil-resistance (practical oil test 1)]

Into a container-shaped molded pulp product, 100 ml of an evaluation liquid (corn oil) at 65°C was poured, and after allowing to stand for 5 minutes, the evaluation liquid was discarded, and the degree of stain of the evaluation liquid on the molded pulp product (container) was visually evaluated according to the following criteria.

A: Oil stain on the outside of the molded pulp container bottom is less than 500 of the container bottom area.

C: Oil stain on the outside of the molded pulp container bottom is 50% or more of the container bottom area.

### [Paper dish test oil-resistance (practical oil test 2)]

Into a container-shaped molded pulp product, 100 ml of an evaluation liquid (corn oil) at 65°C was poured, and after allowing to stand for 45 minutes, the evaluation liquid was discarded, and the degree of stain of the evaluation liquid on the molded pulp product (container) was visually evaluated according to the following criteria.

A: No oil stain on the outside of the molded pulp container bottom.

C: Oil stain on the outside of the molded pulp container bottom.

### [Paper dish test oil-resistance (practical oil test 3)]

Into a container-shaped molded pulp product, 100 ml of an evaluation liquid (corn oil) at 80°C was poured, and after allowing to stand for 45 minutes, the evaluation liquid was discarded, and the degree of stain of the evaluation liquid on the molded pulp product (container) was visually evaluated according to the following criteria.

A: No oil stain on the outside of the molded pulp container bottom.

C: Oil stain on the outside of the molded pulp container bottom.

### [Paper dish test water-resistance (practical water test 1)]

Into a container-shaped molded pulp product, 100 ml of water at 100°C was poured, and after allowing to stand for 45 minutes, the evaluation liquid was discarded, and the degree of stain of the evaluation liquid on the molded pulp product (container) was visually evaluated according to the following criteria.

A: No water stain on the outside of the molded pulp container bottom.

C: Water stain on the outside of the molded pulp container bottom.

The abbreviations have the following meanings:
C12UreaA: CH₂=CH-C(=O)-O-CH₂CH₂-NH-C(=O)-NH-n-C₁₂H₂₅ 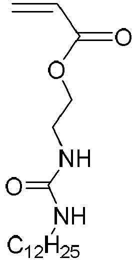
C3UreaA: CH₂=CH-C(=O)-O-CH₂CH₂-NH-C(=O)-NH-n-C₃H₇
C6UreaA: CH₂=CH-C(=O)-O-CH₂CH₂-NH-C(=O)-NH-n-C₆H₁₃
C8UreaA: CH₂=CH-C(=O)-O-CH₂CH₂-NH-C(=O)-NH-n-C₈H₁₇
C18UreaA: CH₂=CH-C(=O)-O-CH₂CH₂-NH-C(=O)-NH-n-C₁₈H₃₇
C11AEA: CH₂=CH-C(=O)-O-CH₂CH₂-NH-C(=O)-n-C₁₁H₂₃
StA: CH₂=CH-C(=O)-O-n-C₁₈H₃₇
HBA: 4-hydroxybutyl acrylate
DMAEMA: N,N-dimethylaminoethyl methacrylate

### <Synthesis Example 1>

Into a nitrogen-substituted reaction container, 1.00 g of C12UreaA, 0.005 g of azobisisobutyronitrile, and 4 ml of toluene were added, and the mixture was heated and stirred at 72°C for 8 hours, and then re-precipitated in methanol to obtain PC12UreaA (polymer of C12UreaA) in 950 yield.

### <Synthesis Examples 2 to 18>

Polymers were obtained in the same manner as in Synthesis Example 1, except that the monomers shown in Table 1 were added in the composition ratios shown in Table 1 with respect to 1 molar equivalent of azobisisobutyronitrile, and acetone was used for reprecipitation in Synthesis Examples 13 and 14.

### <Comparative Synthesis Example 1>

Polymers were obtained in the same manner as in Synthesis Example 1, except that the monomers shown in Table 1 were added in the composition ratios shown in Table 1 with respect to 1 molar equivalent of azobisisobutyronitrile.

### <Synthesis Example 19>

0.7 g of C12UreaA, 0.039 g of HBA, 0.023 g of DMAEMA, 0.009 g of acetic acid, 0.1 g of polyglyceryl oleate, 0.071 g of alkylbis(2-hydroxyethyl)methylammonium chloride, 0.037 g of polyoxyethylene oleyl ether, and 7 ml of water were mixed and emulsified by an ultrasonic homogenizer. To the mixture, 7 mg of 2,2'-azobis(2-methylpropionamidine)dihydrochloride was added, and the mixture was heated at 75°C for 12 hours to obtain a polymer dispersion.

Table 1 shows melting points, melting point half widths obtained from XRD measurement, and peak ratios (measurement temperatures of 25°C and 80°C), peak half widths, peak top changes, and peak top intensity changes obtained from DSC measurement of Synthesis Examples 1 to 18 and Comparative Synthesis Example 1.

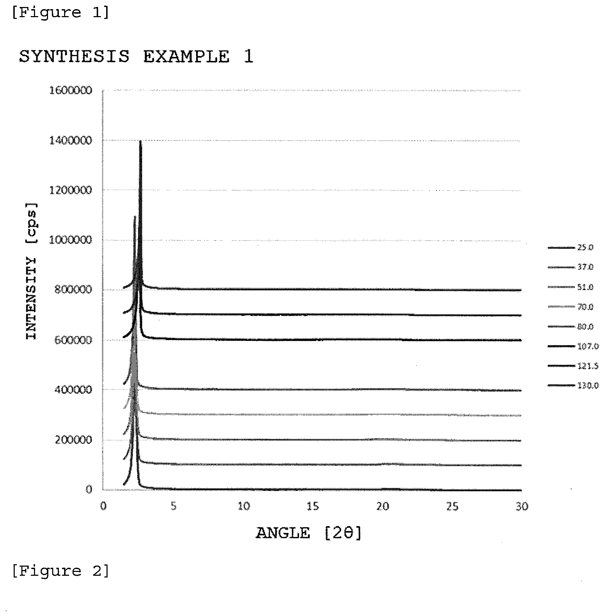

Figure 1 shows X-ray diffraction patterns of the polymer obtained in Synthesis Example 1 at various measurement temperatures.

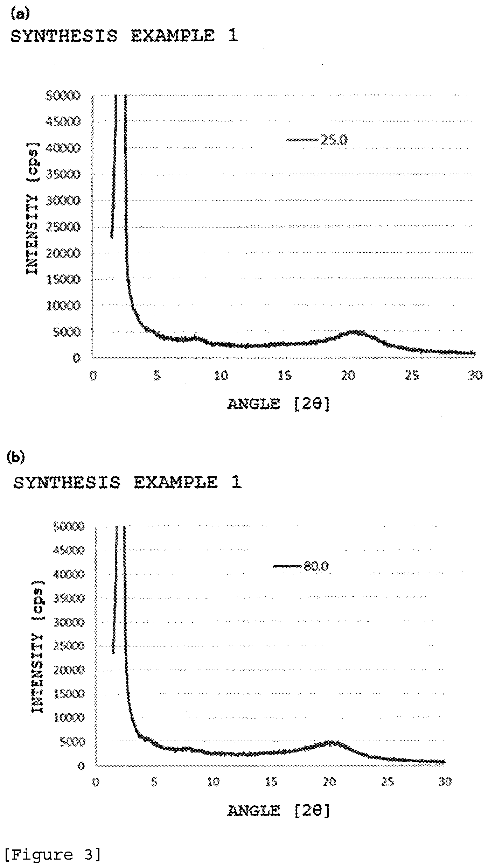

Figure 2 shows enlarged X-ray diffraction patterns of the polymer obtained in Synthesis Example 1 at (a) a measurement temperature of 25°C and (b) a measurement temperature of 80°C.

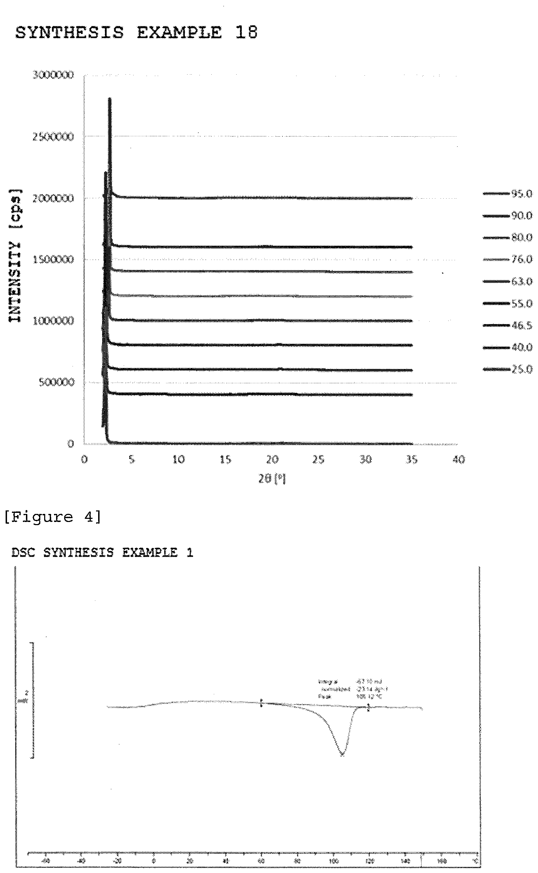

Figure 3 shows X-ray diffraction patterns of the polymer obtained in Synthesis Example 18 at various measurement temperatures.

The numerical values in the legend in the figures indicate the temperature (°C) at the time of measurement of the XRD charts.

Figure 4 shows a chart of differential scanning calorimetry (DSC) measurement of the polymer obtained in Synthesis Example 1.

### <Examples 1 to 18>

Using the compounds shown in Table 2, samples for measurement were prepared using a silicon substrate, and static contact angle measurement and high-temperature contact angle measurement were performed. Further, treated papers were prepared and subjected to KIT test, evaluation of corn oil-resistance, 70°C oil-resistant thin paper test and high-temperature oil-resistant thin paper test. The 120°C corn oil dissolution test was conducted thereafter. The results are shown in Table 2.

In Synthesis Examples 6 to 11, the 25°C corn oil dissolution test results were A (insoluble) in all cases.

In the preparation of the silicon substrate sample and the treated paper, methanol was used as a solvent in the preparation of the treated paper in Examples 13 and 14. In other cases, chloroform was used as a solvent.

### <Example 19>

Treated paper was prepared and evaluated in the same manner as in Example 1, except that Synthesis Example 3 and 1,3,5-tris(6-isocyanatohexyl)-1,3,5-triazinane-2,4,6-trione were used. 1,3,5-tris(6-isocyanatohexyl)-1,3,5-triazinane-2,4,6-trione was added such that the amount of the -NCO group was 1.0 equivalent with respect to the -OH group of the compound of Synthesis Example 3. The results are shown in Table 2.

### <Example 20>

The reaction was performed in the same manner as in Synthesis Example 19, except that the amount of 1,3,5-tris(6-isocyanatohexyl)-1,3,5-triazinane-2,4,6-trione was added such that the amount of the -NCO group was 3.0 equivalents with respect to the -OH group of the compound of Synthesis Example 3. The results are shown in Table 2.

### <Comparative Example 1>

Test evaluation was performed in the same manner as in Examples 1 to 18, except that Comparative Synthesis Example 1 was used. The results are shown in Table 2.

### <Example 21>

### [Preparation of paper dish]

To a freeness (Canadian Freeness) of 550 cc, 2,000 g of a 0.5% by weight of the aqueous dispersion of a mixture of 70 parts of leaf bleached kraft pulp and 30 parts of needle bleached kraft pulp beaten was added with contiguous stirring, and subsequently, 10 g of the aqueous dispersion of the oil-resistant compound (Synthesis Example 5) diluted with water to a solid content of 10% was added and kept stirring for 1 minute.

The above pulp slurry was placed in a metal tank. In the lower part of the tank, a metal pulp mold with a large number of suction holes was present with a reticular body placed on top of the mold. From the side opposite to the side where the reticular body of the pulp mold was placed, the pulp-containing aqueous composition was suctioned and dehydrated through the pulp mold and the reticular body using a vacuum pump, and the solid content (such as pulp) contained in the pulp-containing aqueous composition was deposited on the reticular body to obtain a molded pulp intermediate. Next, the obtained molded pulp intermediate was dried by applying pressure from above and below with male and female metal molding dies heated to 60 to 200°C. As a result, a molded pulp product formed in the shape of a container was produced. When a paper dish evaluation (practical oil test 1) was performed using the paper dish which is the molded pulp product, the result was "A".

### <Example 22>

### [Preparation of paper dish]

To a freeness (Canadian Freeness) of 550 cc, 2,000 g of a 0.5% by weight of the aqueous dispersion of a mixture of 70 parts of leaf bleached kraft pulp and 30 parts of needle bleached kraft pulp beaten was added with contiguous stirring, and subsequently, 3 g of the aqueous dispersion of Synthesis Example 19 was added and kept stirring for 1 minute.

The above pulp slurry was placed in a metal tank. In the lower part of the tank, a metal pulp mold with a large number of suction holes was present with a reticular body placed on top of the mold. From the side opposite to the side where the reticular body of the pulp mold was placed, the pulp-containing aqueous composition was suctioned and dehydrated through the pulp mold and the reticular body using a vacuum pump, and the solid content (such as pulp) contained in the pulp-containing aqueous composition was deposited on the reticular body to obtain a molded pulp intermediate. Next, the obtained molded pulp intermediate was dried by applying pressure from above and below with male and female metal molding dies heated to 60 to 200°C. As a result, a molded pulp product formed in the shape of a container was produced. When a paper dish evaluation (practical oil test 1) was performed using the paper dish which is the molded pulp product, the result was "A". Further, the results were "A" in the paper dish evaluation (practical oil test 2), paper dish evaluation (practical oil test 3), and paper dish test water-resistance (practical water test 1).

**[Table 1]**

| | Monomer | Monomer composition mol% | DSC measurement | | XRD measurement | | | | |
|---|---|---|---|---|---|---|---|---|---|
| | | | Melting point [°C] | Melting point peak half width [°C] | Peak ratio *25°C | Peak ratio * 80°C | 15∼25° Peak half width [°] | Peak top change ** | Peak intensity change *** |
| Syn. Ex. 1 | C12UreaA | 100 | 105.1 | 11.4 | 126 | 135 | 4.9 | 107°C | unchanged |
| Syn. Ex. 2 | C12UreaA/HBA | 50/50 | 70.3 | 16.0 | 2.8 | - | 5.0 | - | - |
| Syn. Ex. 3 | C12UreaA/HBA | 80/20 | 88.0 | 15.2 | 3.0 | 2.5 | 4.5 | 92°C | 126°C |
| Syn. Ex. 4 | C12UreaA/HBA/DMAEMA | 52/36/12 | 70.0 | 16.0 | 3.8 | - | 5.0 | - | - |
| Syn. Ex. 5 | C12UreaA/HBA/DMAEMA | 75/10/15 | 78.8 | 28.8 | 4.7 | 5.2 | 5.5 | unchanged | 110°C |
| Syn. Ex. 6 | C3UreaA | 100 | >150 | - | - | - | 6.3 | - | - |
| Syn. Ex. 7 | C3UreaA/HBA | 50/50 | >150 | - | - | - | 6.1 | - | - |
| Syn. Ex. 8 | C3UreaA/HBA | 80/20 | >150 | - | - | - | 6.7 | - | - |
| Syn. Ex. 9 | C6UreaA | 100 | Tg 42.0 | - | 1.4 | - | 5.5 | - | - |
| Syn. Ex. 10 | C6UreaA/HBA | 50/50 | Tg 12.0 | 28.0 | 1.5 | - | 7.9 | - | - |
| Syn. Ex. 11 | C6UreaA/HBA | 80/20 | Tg 33.0 | - | 0.7 | - | 6.2 | - | - |
| Syn. Ex. 12 | C8UreaA | 100 | Tg 40.0 | 11.2 | 4.7 | - | 4.9 | - | - |
| Syn. Ex. 13 | C8UreaA/HBA | 50/50 | Tg 8.0 | 7.2 | 0.8 | - | 7.3 | - | - |
| Syn. Ex. 14 | C8UreaA/HBA | 80/20 | Tg 27.0 | 22.4 | 5.1 | - | 5.5 | - | - |
| Syn. Ex. 15 | C18UreaA | 100 | 110.8 | 8.5 | 3.5 | 3.0 | 4.3 | 126°C | unchanged |
| Syn. Ex. 16 | C18UreaA/HBA | 80/20 | 97.3 | 11.2 | 1.7 | - | 4.2 | - | - |
| Syn. Ex. 17 | C18UreaA/HBA/DMAEMA | 75/10/15 | 87.3 | 20.0 | 2.6 | - | 3.8 | - | - |
| Syn. Ex. 18 | C11AEA | 100 | 75.0 | 8.0 | 127 | 240 | 2.5 | 76°C | unchanged |
| Com. Syn. Ex. 1 | StA | 100 | 50.3 | 3.2 | 0.4 | - | 1.3 | 45°C | 45°C |

In the XRD measurement of Table 1,
* Peak ratio: (Peak ratio) = (Intensity of peak at 2Θ of 5° or less)/(Intensity of peak at 2Θ of 15 to 25°)
** Peak top change:
   The lowest temperature at which the value of 2Θ at the peak top of the peak having 2Θ of 5° or less at 25°C changes by 0.2° or more in the measurement temperature of 25°C to 130°C.
   In a case where the value of 2Θ at the peak top of the peak at 2Θ of 5° or less does not change by 0.2° or more in the measurement from 25°C to 130°C, it is described as unchanged.
*** Peak top intensity:
   The lowest temperature at which the peak intensity of the peak at 2Θ of 5° or less becomes 500 or less, in a case where the peak intensity of the peak at 2Θ of 5° or less at 25°C is taken as 100% in the measurement temperature of 25°C to 130°C.

In a case where the peak intensity of the peak at 2Θ of 5° or less is not 500 or less in the measurement from 25°C to 130°C, it is described as unchanged.

**[Table 2]**

| | | Contact angle (HD) [°] | | High-temperature contact angle measurement (HD) **** | | | | | KIT test | Corn oil-resistance evaluation | 70°C oil-resistance [min] | High-temperature oil-resistance [°C] | Corn oil 120°C dissolution |
|---|---|---|---|---|---|---|---|---|---|---|---|---|---|
| | Compound | 25°C | 70°C | 40° or less | 35° or less | 30° or less | 25° or less | 15° or less | | | | | |
| Ex. 4 | Syn. Ex. 4 | 42.5 | 44.0 | 80°C | 80°C | 80°C | 80°C | 85°C | - | - | - | - | - |
| Ex. 5 | Syn. Ex. 5 | 42.7 | 44.0 | 85°C | 85°C | 85°C | 90°C | 95°C | - | - | - | - | - |
| Ex. 6 | Syn. Ex. 6 | - | - | - | - | - | - | - | - | - | - | - | A |
| Ex. 7 | Syn. Ex. 7 | - | - | - | - | - | - | - | - | - | - | - | A |
| Ex. 8 | Syn. Ex. 8 | - | - | - | - | - | - | - | - | - | - | - | A |
| Ex. 9 | Syn. Ex. 9 | - | - | - | - | - | - | - | - | - | - | - | A |
| Ex. 10 | Syn. Ex. 10 | - | - | - | - | - | - | - | - | - | - | - | A |
| Ex. 11 | Syn. Ex. 11 | - | - | - | - | - | - | - | - | - | - | - | A |
| Ex. 12 | Syn. Ex. 12 | 44.3 | 43.7 | 95°C | 100°C | 110°C | 115°C | 120°C | 6 | A | >7 | 130 | - |
| Ex. 13 | Syn. Ex. 13 | 45.4 | 26.1 | 50°C | 55°C | 60°C | 75°C | 85°C | 6 | A | >7 | 120 | - |
| Ex. 14 | Syn. Ex. 14 | 33.0 | 31.4 | 25°C | 25°C | 85°C | 95°C | 100°C | 6 | A | >7 | 120 | - |
| Ex. 15 | Syn. Ex. 15 | 44.6 | 45.7 | 90°C | 95°C | 95°C | 95°C | 95°C | - | - | - | - | - |
| Ex. 16 | Syn. Ex. 16 | 46.1 | 45.8 | 90°C | 95°C | 95°C | 95°C | 95°C | 6 | A | >7 | 120 | - |
| Ex. 17 | Syn. Ex. 17 | 45.1 | 45.0 | 90°C | 90°C | 90°C | 95°C | 95°C | 6 | A | >7 | 120 | - |
| Ex. 18 | Syn. Ex. 18 | 44.0 | 30.0 | 70°C | 70°C | 75°C | 75°C | 80°C | - | - | - | - | - |
| Ex. 19 | Syn. Ex. 3 | 43.7 | 41.8 | 85°C | 90°C | 90°C | 95°C | 100°C | - | - | - | - | - |
| Ex. 20 | Syn. Ex. 3 | 44.0 | 41.2 | 80°C | 85°C | 90°C | 90°C | 95°C | - | - | - | - | - |
| Com. Ex. 1 | Com. Syn. Ex. 1 | 41.6 | <7 | 35°C | 40°C | 40°C | 40°C | 40°C | 4 | A | <0.5 | <70 | C |

In Table 2, the contact angle of hexadecane shows values at measurement temperatures of 25°C and 70°C.

**** High-temperature contact angle measurement: each indicates the temperature at which the angle equal to or less than a predetermined contact angle is reached. The measurement was performed at intervals of 5.0°C.

### Industrial Applicability

The compounds and oil-resistant agents of the present disclosure can be applied to paper, particularly food containers and food packaging materials.

## Claims

1. A non-fluorine compound satisfying at least one of:
in an X-ray diffraction (XRD) measurement,
(i) having an intensity of a peak at 2Θ of 5° or less which is 0.7 times or more an intensity of a peak at 15 to 25° at a measurement temperature of 25°C;
(ii) having an intensity of a peak at 2Θ of 5° or less which is 0.7 times or more an intensity of a peak at 15 to 25° at a measurement temperature of 80°C;
(iii) having a half width of a peak at 2Θ of 15 to 25° of 2.0° or more at a measurement temperature of 25°C;
(iv) having a value of peak top at 2Θ of 5° or less which does not change at a measurement temperature of 25°C to 70°C; and
(v) having an intensity of a peak at 2Θ of 5° or less which is maintained at a measurement temperature of 25°C to 80°C, and
in a differential scanning calorimetry (DSC) measurement,
(vi) having a half width of a melting peak at 0°C to 120°C of 4.5°C or more,
wherein the non-fluorine compound has a hexadecane (HD) contact angle of 30° or more at a measurement temperature of 25°C and/or is not soluble in corn oil at 25°C.

2. A non-fluorine compound satisfying at least one of:
(i) having a hexadecane (HD) contact angle at 70°C of 30° or more;
(ii) being insoluble in corn oil at 120°C;
when adhered to a paper,
(iii) having an oil-resistant thin paper test result at 70°C of 3 minutes or more;
(iv) having a high-temperature oil-resistant thin paper test result of 80°C or more; and
(v) having a paper dish test result using oil at 65°C of less than 500 oil stain,
wherein the non-fluorine compound has a melting point of 30°C or more and/or a glass transition temperature of 0°C or more and/or a crystallization temperature of 30°C or more.

3. The non-fluorine compound according to claim 1 or 2, wherein the non-fluorine compound has a linear hydrocarbon group or a branched or cyclic hydrocarbon group and a hydrogen bonding moiety.

4. The non-fluorine compound according to claim 3, wherein the non-fluorine compound is an acrylic compound.

5. An oil-resistant agent comprising the non-fluorine compound according to any one of claims 1 to 4.

6. The oil-resistant agent according to claim 5, wherein the non-fluorine compound is a non-fluorine polymer, and
the non-fluorine polymer comprises a repeating unit formed from a hydrocarbon group/hydrogen bonding moiety-containing acrylic monomer represented by
(1) the formula:
CH₂=C(-R¹²)-C(=O)-Y-X¹¹(Z-X¹²-R¹¹)ₖ
wherein R¹¹ is a linear, branched, or cyclic hydrocarbon group having 3 to 22 carbon atoms;
R¹² is a hydrogen atom, a monovalent organic group, or a halogen atom excluding a fluorine atom;
Y is -O- or -NR'-, wherein R' is H or a hydrocarbon group having 1 to 4 carbon atoms;
Z is a group composed of at least one selected from -NH-, -(C=O)-, -O-, and -SO₂-;
X¹¹ is a direct bond or a divalent to tetravalent group composed of at least one selected from a hydrocarbon group having 1 to 20 carbon atoms optionally including a hydrocarbon moiety having a substituent; - (CH₂CH₂O)ᵣ-, wherein r is an integer of 1 to 10, -C₆H₄-, - O-, or -NR'-, wherein R' is H or a hydrocarbon group having 1 to 4 carbon atoms;
X¹² is a direct bond or a divalent group composed of at least one selected from a hydrocarbon group having 1 to 20 carbon atoms optionally including a hydrocarbon moiety having a substituent; -(CH₂CH₂O)ᵣ-, wherein r is an integer of 1 to 10, -O-, or -NR'-, wherein R' is H or a hydrocarbon group having 1 to 4 carbon atoms; and
k is 1 to 3, or
CH₂=C(-R¹²)-C(=O)-O-(CH₂)ₘ-Z-R¹¹
wherein R¹¹, R¹², and Z are as defined above, and m is a number of 1 to 20.

7. The oil-resistant agent according to claim 6, wherein the non-fluorine polymer comprises a repeating unit formed from a reactive/hydrophilic monomer represented by the formula:
CH₂=C(-R²²)-C(=O)-Y²¹-(R²³)ₒ(R²¹)ₘ
or
CH₂=C(-R³²)-Y³¹-(H)₅₋ₙ(R³¹)ₙ
wherein R²¹ and R³¹ are each independently a reactive group or a hydrophilic group;
R²² and R³² are a hydrogen atom, a monovalent organic group, or a halogen atom excluding a fluorine atom;
Y²¹ is a direct bond, -O- or -NR'-, wherein R' is H or a hydrocarbon group having 1 to 4 carbon atoms;
R²³ is a group having a direct bond or a divalent to tetravalent hydrocarbon group having 1 to 10 carbon atoms optionally including a hydrocarbon moiety having a substituent;
Y³¹ is a benzene ring;
H is a hydrogen atom;
H and R³¹ are each directly bonded to Y³¹;
m and n are 1 to 3; and
o is 0 or 1,
and/or
a reactive/hydrophilic monomer represented by the formula:
CH₂=CR^{4a}-C(=O)-O-(RO)ₙ-X⁴¹
wherein X⁴¹ is a hydrogen atom or an unsaturated or saturated hydrocarbon group having 1 to 22 carbon atoms;
R⁴² is a hydrogen atom or a methyl group;
R is an alkylene group having 2 to 6 carbon atoms; and
n is an integer of 1 to 90.

8. The oil-resistant agent according to claim 6 or 7, wherein the non-fluorine polymer comprises a repeating unit formed from a crosslinkable monomer represented by the formula: 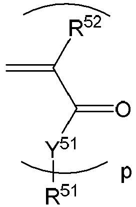 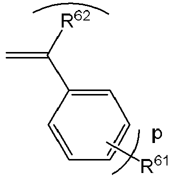 or 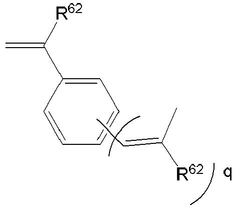
wherein R⁵¹ and R⁶¹ are each independently a direct bond or a divalent to tetravalent group composed of at least one selected from a hydrocarbon group having 1 to 20 carbon atoms optionally including a hydrocarbon moiety having a substituent; -(CH₂CH₂O)ᵣ-, wherein r is an integer of 1 to 10, -C₆H₄-, -O-, or -NR'-, wherein R' is H or a hydrocarbon group having 1 to 4 carbon atoms;
R⁵² and R⁶² are each independently a hydrogen atom, a monovalent organic group, or a halogen atom excluding a fluorine atom;
Y⁵¹ is -O- or -NR'-, wherein R' is H or a hydrocarbon group having 1 to 4 carbon atoms;
p is 2 to 4; and
q is 1 to 5.

9. The oil-resistant agent according to any one of claims 5 to 8, comprising a cross-linking agent.

10. An oil-resistant agent composition comprising:
the oil-resistant agent according to any one of claims 5 to 9; and
a liquid medium which is water or a mixture of water and an organic solvent.

11. The oil-resistant agent composition according to claim 10, further comprising an emulsifier (dispersant).

12. The oil-resistant agent composition according to claim 10 or 11, which is an oil-resistant agent composition for a paper.

13. A method for treating an oil-resistant paper, comprising applying, to a paper, the non-fluorine compound, the oil-resistant agent, or the oil-resistant agent composition according to any one of claims 1 to 12.

14. An oil-resistant paper comprising a non-fluorine compound adhered to the paper, the compound being the non-fluorine compound according to any one of claims 1 to 4 or the non-fluorine compound in the oil-resistant agent according to any one of claims 5 to 9.
